# EUROPEAN PATENT SPECIFICATION

(11) **EP 4 127 989 B1**
(45) Date of publication and mention of the grant of the patent: **18.03.2026**
(21) Application number: 21781547.1
(22) Date of filing: 30.03.2021
(51) Int. Cl.: H04L 9/40, G06F 21/32, G06F 21/34, H04W 12/06

(54) **MULTI STEP AUTHENTICATION METHOD AND SYSTEM**
VERFAHREN UND SYSTEM ZUR AUTHENTIFIZIERUNG IN MEHREREN SCHRITTEN
PROCÉDÉ ET SYSTÈME D'AUTHENTIFICATION EN PLUSIEURS ÉTAPES

(30) Priority: 30.03.2020 HK 32020005037
(43) Date of publication of application: 08.02.2023
(73) Proprietor: IQ Works Limited, Chai Wan, Hong Kong (HK)
(72) Inventor: KANGA, Rustom Adi, Gordon, NSW 2072 (AU); LI, Lai Chun, Hong Kong (HK)
(74) Representative: Matter IP Limited
(86) International application number: PCT/CN2021/083743
(87) International publication number: WO 2021/197288

(56) References cited:
- WO-A1-2017/181198
- CN-A- 103 400 420
- CN-A- 103 440 686
- CN-A- 104 639 526
- CN-A- 107 067 486
- CN-A- 108 900 561
- US-A1- 2011 082 767
- US-A1- 2020 045 055
- US-A1- 2020 076 796

## Description

### TECHNICAL FIELD

The present disclosure relates to a multi step authentication method and system, in particular, but not limited to a multi step authentication method and system to authenticate a person as an authorized person.

### BACKGROUND

Access control is ubiquitous in modern society. For example, access control to control access to a location is very commonly implemented. For example, controlling access to a building is a common place. Access cards are one example of an access control device that are commonly used. Access cards can be used by a person wishing to gain access to a controlled site. The site entry point often has an appropriate scanner. The access card is scanned on the scanner. The scanner identifies access card as an authorized control device and provides access to the person. Biometric systems are another example of access control that are commonly used. Example biometric systems that are commonly used are finger print scanners, facial recognition devices or retinal scanners.

Access cards present some problems with controlling access. Access cards can be used by persons other than the one whom the card was issued to. Access cards can be stolen and be used by unauthorized persons to gain access to controlled sites. This is because access cards do not identify a person, but rather only identify the card. The assumption being the authorized person holds the card.

Biometric systems (e.g. finger print scanners, retinal scanners etc.) also present some problems with respect to accuracy. Biometric scanners are accurate, but even with high degrees of accuracy there can be some persons that are not identified. This error rate can often be unacceptable.

PCT Patent Application WO2017/181198 discloses a method to implement multifactor authentication of a user with a wearable electronic device of the user. The method comprises the step of performing biometric authentication of a person that bears the wearable electronic device. The method is adapted to receive one or more first biometric signals generated by one or more sensors of the wearable electronic device. The one or more first biometric signals are indicative of one or more person-specific biometric characteristics of the person. The method then determines the one or more person-specific biometric characteristic of the person from the one or more first biometric signals and compares the one or more person-specific biometric characteristics to one or more user-specific biometric characteristics of the user determined from one or more second biometric signals generated by the one or more sensors of the wearable electronic device at one or more previous times when the wearable electronic device was borne by the user. The method then determines a confidence level that the person is the user to determine a positive or negative biometric authentication of the person as the user. After that, an access control token of the wearable electronic device is presented to an access reader that performs token-based authentication of the person. The access control token presented to the access reader is an authorized access control token and the access reader is configured to grant the person access to an access-restricted resource based solely on the access control token being an authorized access control token. In response to the confidence level being below a threshold confidence level, a challenge question is presented to the person for authentication based on the user's response to receive an answer to the challenge question that matches an expected answer to the challenge question. The person will then grant access to the access-restricted resource based on the access control token being an authorized access control token even when a negative authentication based on biometric authentication and/or knowledge based authentication occurs. This prior art method requires a lot of interaction between user and the system, whereas the present invention does not require any user interaction or input.

US Patent Application US 2020/076796 A1 discloses a computer-implemented method of authenticating a user using multi-factor authentication. The method comprises the steps of: receiving a request from a user device to authenticate a user; determining the user device is linked to a vehicle system over a wireless network connection; receiving, from the user device, credential information associated with the user; receiving vehicle data from the linked vehicle system obtained over the wireless network connection, the vehicle data including evidence of the wireless network connection; receiving external vehicle data stored remotely from the vehicle; comparing the received vehicle data to the received external vehicle data; comparing the received credential information to stored user data; determining the received vehicle data matches the received external vehicle data and the received credential information matches the stored user data; and determining the user is authenticated by responding to the received request and granting access. This prior art does not provide a precise control of the authentication which will increase the costs and resources for unnecessary actions.

### SUMMARY OF THE INVENTION

Access control is very commonly used in a variety of different applications in modern society. Some common examples.

The present disclosure relates to a multi step authentication method and system. The present disclosure relates to a multi step authentication method for authenticating a person as an authorized person. The present disclosure also relates to a system for authenticating a person or a vehicle, wherein the system performs a multi step authentication method to authenticate a person, as an authorized person. The multi step authentication method implements a separate authentication technique at each step. The person is authenticated as an authorized person if all steps generate a successful authentication. The multi step
authentication method and system can also be used to authenticate a vehicle or a user device as an authorized vehicle or authorized user device.

In accordance with a first aspect the present disclosure relates to a multi step authentication method for authenticating a person as an authorized person, the multi step authentication method being executed by a multi step authentication system including an authentication server, a user device, the method comprising the steps of:
executing a first authentication phase, the first authentication phase comprises performing a first authentication technique;
executing a second authentication phase, the second authentication phase comprises performing a second authentication technique,
wherein the first authentication technique and second authentication technique are disparate;
both the first and second authentication techniques utilize contactless authentication techniques;
wherein the second authentication phase is performed after the first authentication phase successfully authenticates a person as an authorized user,
a person is authenticated as an authorized person or vehicle if both the first authentication phase and second authentication phase successfully authenticate the person or vehicle, and;
wherein the first authentication phase and second authentication phase are sequentially alterable.

In one embodiment the first authentication technique comprises a proximity based identification technique, and the second authentication technique comprises an image processing identification technique that identifies an object or person in an image.

In an embodiment the method comprises an additional step of executing a third authentication phase, the third authentication phase comprises a third authentication technique, wherein the third authentication technique comprises a location identification technique, and; the first, second and third authentication phases are sequentially alterable.

In one embodiment the first authentication phase comprises the additional steps of:
wirelessly interacting with at least one transceiver device via a user device associated with the person or vehicle,
receiving a verification signal from the at least one transceiver device at the user device, wherein the verification signal confirming the user device has successfully interacted with the at least one transceiver device,
calculating proximity of the user device to the at least one transceiver device at the user device,
determining the user device as successfully authenticated if the user device is within a predetermined proximity of the at least one transceiver device,
transmitting, to the authentication server, meta data related to the user if the user device is determined as authenticated.

In one embodiment the first authentication phase comprises the additional steps of:
processing the received meta data corresponds to an authenticated user,
providing a confirmation signal confirming the person or vehicle associated is an authorized user device.

Preferably the transceiver device comprises at least one of: a WiFi module, a Bluetooth transceiver or an NFC receiver, wherein the transceiver is positioned at a predetermined location.

In an embodiment the second authentication phase comprises the additional steps of:
capturing an image of a person or vehicle, or capturing an image of a portion of the person or vehicle, by a camera;
transmitting the captured image to the authentication server,
processing, at the authentication server, the captured image to identify a person or vehicle within the captured image, wherein the person or vehicle are identified by applying an object recognition technique,
determining, at the authentication server, if the identified person or vehicle within the image substantially matches an approved person or vehicle, and;
the person or vehicle is determined as an authorized person or vehicle if the identified person or vehicle within the image substantially matches the approved person or vehicle.

In an embodiment the third authentication phase comprises the additional steps of:
determining the location of the user device, wherein the user device is associated with the person or a vehicle, wherein the location of the user device is determined using a positioning system,
authenticating the person or vehicle as an authorized person or vehicle is at a predetermined location.

In accordance with a second aspect the present disclosure relates to a multi step authentication method to authenticate a person, the multi step authentication method comprising the steps of:
determining, at a user device, a location of the user device associated with the person, wherein the location of the user device is determined at the user device using a positioning system;
transmitting, by the user device, the location of the user device to an authentication server;
processing, at the authentication server, the received location and determining the if the user device is at a predetermined location or within vicinity of a predetermined location;
transmitting, by the authentication server, a verification signal to the user device confirming the user device is at a predetermined location or within vicinity of a predetermined location;
executing a first authentication process using a first authentication technique in response to receiving a verification signal, wherein the first authentication technique comprises a proximity based identification technique;
executing a second authentication process using a second authentication technique in response to receiving a verification signal, wherein the second authentication technique comprises a image processing based identification technique;
authenticating, by the authentication server, a person as an authorized person if the user device is identified at a predetermined location or in the vicinity of a predetermined location and the first authentication process determines a successful authentication and the second authentication process determines a successful authentication, and;
wherein the first authentication process and second authentication process are sequentially alterable.

In an embodiment the positioning system is a global positioning system (GPS), and the user device continually interacts with the global positioning system to determine a location of the user device.

In an embodiment the first authentication process comprises the steps of:
interrogating, by the user device, a transceiver device;
calculating, by the user device, a proximity of the transceiver device from the user device;
the user device is deemed authenticated if the user device is calculated to be within a predefined proximity to the transceiver device; wherein the transceiver device comprises at least one of: a WiFi module, a Bluetooth transceiver or an NFC receiver, wherein the transceiver is positioned at a predetermined location;
transmitting, by the user device, to the authentication server a code or an identity number, wherein the code or identity number is a unique code or unique identity number, and wherein the code or identity number corresponds to the person.

In an embodiment the second authentication process comprises the steps of:
transmitting, by the authentication server, an activation signal to a camera to activate the camera if the first authentication process results in a successful authentication of the person;
capturing an image of the person by the camera;
receiving, at the authentication server, the captured image;
processing the captured image at the authentication server, wherein an object recognition technique is applied to the received captured image to identify the person;
checking, at the authentication server, if the identified person within the captured image corresponds to an authorized person stored within the authentication server or within an image database; and;
the person is deemed authenticated if the identified person within the captured image corresponds to an authorized person stored within an image database.

In an embodiment the second authentication process comprises the steps of:
transmitting, by the authentication server, an activation signal to the user device to activate the camera associated with the user device if the first authentication process results in a successful authentication of the person;
capturing an image of the person by the camera associated with the user device;
processing, at the user device, the captured image to generate meta data or a code associated with the captured image;
transmitting, by the user device, the meta data or transmitting a code associated with the meta data to the authentication server,
comparing, at the authentication server, the received meta data with stored meta data or comparing the received code with a stored code, wherein the stored meta data or stored code corresponds to an authorized person;
the person is deemed authenticated if the received meta data from the user device corresponds substantially to the stored meta data or if the received code substantially corresponds to the stored code.

In an embodiment the multi step authentication method comprises the additional steps of:
transmitting, by the authentication server, an activation signal to activate a fixed camera if the first authentication process is successful;
capturing, by the camera, an image of an object associated with the person,
transmitting, by the camera, the captured image to the authentication server,
processing, by the authentication server, the captured image by applying an object recognition technique to the captured image to identify one or more structural features or alphanumeric characters located within the captured image,
comparing the identified one or more structural features or alphanumeric characters with one or more approved structural features or approved alphanumeric characters,
the person is authenticated, by the authentication server, if the identified one or more structural features or alphanumeric characters correspond to the approved structural features or approved alphanumeric characters.

In an embodiment the method comprises the step of executing a enrollment process, wherein the enrollment process comprises:
capturing an image of the person, identity of the user device and authorization information;
identifying image meta data related to the captured image of the person
generating a code, at the authentication server, wherein the code is associated with the person and the image meta data.

In an embodiment the object associated with the person is a vehicle and the method comprises the steps of capturing an image of the vehicle or a vehicle number plate, comparing the captured image with a stored image and if the vehicle or vehicle number plate in the image correspond to a stored vehicle or number plate, authenticating the person associated with the vehicle as an authorized person.

In accordance with a third aspect the present disclosure relates to a multi step authentication system for authenticating a person, the system comprising:
a user device associated with the person;
an authentication server;
the user device and authentication server in electronic communication, wherein the authentication server is configured for two way communication with the user device;
a positioning system, the authentication server and the user device in communication with the positioning system, the user device and/or the authentication server configured to determine a position of the user device or the person based on interaction with the positioning system;
one or more transceiver devices, the user device configured to communicate with the one or more transceiver devices;
a camera, the camera configured to communicate with authentication server and/or the user device;
the user device configured to interact with the transceiver device and the authentication server to execute a first authentication process using a first authentication technique;
the user device configured to interact with the authentication and the camera to execute a second authentication process using a second authentication technique;
the first authentication technique and the second authentication technique are contactless authentication techniques;
the first authentication process and the second authentication process are sequentially alterable and;
a person is authenticated as an authorized person if both the first authentication process and second authentication process successfully authenticate the person.

Preferably the positioning system is a global positioning system (a GPS system).

Preferably the first authentication technique comprises a proximity based identification technique, and the second authentication technique comprises an image processing based identification technique.

In an embodiment the first authentication process comprises:
the user device configured to interrogate a transceiver device;
the user device configured to calculate a proximity of the transceiver device from the user device based on the interrogation;
the user device is deemed authenticated if the user device is calculated to be within a predefined proximity to the transceiver device;
wherein the transceiver device comprises at least one of: a WiFi module, a Bluetooth transceiver or an NFC receiver,
wherein the transceiver is positioned at a predetermined location;
the user device configured to the authentication server a code or an identity number; and wherein the code or identity number is a unique code or unique identity number, and wherein the code or identity number corresponds to the person.

In an embodiment the camera is integrated into the user device.

In an embodiment the camera is a standalone camera, wherein the standalone camera is mounted at a predefined location, and wherein the standalone camera is configured to receive signals from the authentication server and image data to the authentication server.

In an embodiment the second authentication process comprises:
the authentication server configured to activate the camera associated with the user device by transmitting an activation signal if the first authentication process results in a successful authentication of the person;
the camera associated with the user device configured to capture an image of the person;
the user device configured to process the captured image to generate meta data associated with the captured image;
the user device further configured to transmit the meta data or transmit a code associated with the meta data to the authentication server,
the authentication server configured to process the received meta data with stored meta data or comparing the received code with a stored code, wherein the stored meta data or stored code corresponds to an authorized person; and
the person is deemed authenticated if the received meta data from the user device corresponds substantially to the stored meta data or if the received code substantially corresponds to the stored code.

In an embodiment the stored meta data or stored code is stored within the authentication server, and wherein the stored meta data or stored code is associated with an authorized person and wherein each authorized person is associated with a unique stored meta data or a unique stored code.

In an embodiment the second authentication process comprises:
the authentication server configured to transmit an activation signal to a camera to activate the camera if the first authentication process results in a successful authentication of the person;
the camera configured to capture an image of the person;
the authentication server is configured to receive the captured image;
the authentication server is configured to process the captured image, wherein the authentication server is configured to apply an object recognition technique to the received captured image to identify the person;
the authentication server is configured to check if the identified person within the captured image corresponds to an authorized person stored within the authentication server or within an image database; and;
the person is deemed authenticated if the identified person within the captured image corresponds to an authorized person stored within an image database.

In accordance with a further aspect the present disclosure relates a multi step authentication for method for authenticating a person, the method being implemented using a user device, an authentication server, the method comprises the steps of:
calculating a location of a user device associated with the person wherein the location of the user device is determined at the user device by utilizing a global positioning system;
the location being determined as a set of coordinates;
transmitting a verification signal once the user device is at a predefined location, wherein the verification signal confirming the user device is at a predefined location,
executing a first authentication process using a first authentication technique in response to receiving a verification signal, wherein the first authentication technique comprises a proximity based identification technique;
the first authentication process comprising the steps of:
   interrogating, by the user device, a transceiver device;
   calculating, by the user device, a proximity of the transceiver device from the user device;
   the user device is deemed authenticated if the user device is calculated to be within a predefined proximity to the transceiver device; wherein the transceiver device comprises at least one of: a WiFi module, a Bluetooth transceiver or an NFC receiver, wherein the transceiver is positioned at a predetermined location;
   transmitting, by the user device, to the authentication server a code or an identity number, wherein the code or identity number is a unique code or unique identity number, and wherein the code or identity number corresponds to the person;
   executing a second authentication process using a second authentication technique in response to receiving a verification signal, wherein the second authentication technique comprises a image processing based identification technique;
   the second authentication process comprising the steps of:
      transmitting, by the authentication server, an activation signal to the user device to activate the camera associated with the user device if the first authentication process results in a successful authentication of the person;
      capturing an image of the person by the camera associated with the user device;
      processing, at the user device, the captured image to generate meta data or a code associated with the captured image;
      transmitting, by the user device, the meta data or transmitting a code associated with the meta data to the authentication server,
      comparing, at the authentication server, the received meta data with stored meta data or comparing the received code with a stored code, wherein the stored meta data or stored code corresponds to an authorized person;
      the person is deemed authenticated if the received meta data from the user device corresponds substantially to the stored meta data or if the received code substantially corresponds to the stored code;
      authenticating, by the authentication server, a person as an authorized person if the user device is identified at a predetermined location or in the vicinity of a predetermined location and the first authentication process determines a successful authentication and the second authentication process determines a successful authentication, and;
      wherein the first authentication process and second authentication process are sequentially alterable.

In embodiment the method comprises the step of executing an enrollment process, wherein the enrollment process comprises:
capturing an image of the person, identity of the user device and authorization information;
identifying image meta data related to the captured image of the person;
generating a code, at the authentication server, wherein the code is associated with the person and the image meta data.

In an embodiment, the image of the person, identity of the user device, authorization information or the image meta data may be stored on the user device.

In In an embodiment the multi step authentication method comprises the additional steps of:
transmitting, by the authentication server, an activation signal to activate a fixed camera if the first authentication process is successful;
capturing, by the camera, an image of a vehicle license plate of a person's vehicle, transmitting, by the camera, the captured image to the authentication server,
processing, by the authentication server, the captured image by applying an object recognition technique to the captured image to identify the license plate characters within the captured image;
comparing the identified license plate with an approved licensed plate stored within the authentication server;
the person is authenticated, by the authentication server, if the identified license plate matches the stored license plate.

In accordance with a further aspect, the present disclosure relates to an authentication method executed by a user device, the method comprising the steps of:
executing a pre authentication process, the pre authentication process comprising the steps of:
interacting with a positioning system;
receiving location data from the positioning system;
estimating a location of the user device based on the location data;
determining if the user device is at a predefined location;
transmitting a verification signal to the authentication server regarding the user being at a predefined location;
interrogating a transceiver device;
receiving a signal from the transceiver device;
calculating a proximity of the transceiver device from the user device;
the user device is deemed authenticated if the user device is calculated to be within a predefined proximity to the transceiver device; wherein the transceiver device comprises at least one of: a WiFi module, a Bluetooth transceiver or an NFC receiver, wherein the transceiver is positioned at a predetermined location;
transmitting a code or an identity number to an authentication server, wherein the code or identity number is a unique code or unique identity number, and wherein the code or identity number corresponds to the person;
activating an integrated camera of the user device;
capturing an image of the person by the camera;
processing the captured image to generate meta data or a code associated with the captured image;
transmitting the meta data or transmitting a code associated with the meta data to the authentication server,
receiving a confirmation signal that indicates the code or meta data matches the stored code or meta data within the authentication server;
wherein a person is authenticated if the user device is at the predefined location, is within a predefined proximity to the transceiver device and if the code or meta data from the captured image matches a stored code or meta data.

The term "comprising" (and its grammatical variations) as used herein are used in the inclusive sense of "having" or "including" and not in the sense of "consisting only of".

It should be understood that alternative embodiments or configurations may comprise any or all combinations of two or more of the parts, elements or features illustrated, described or referred to in this specification.

Any reference to prior art contained herein is not to be taken as an admission that the information is common general knowledge, unless otherwise indicated. It is to be understood that, if any prior art information is referred to herein, such reference does not constitute an admission that the information forms a part of the common general knowledge in the art, in any other country.

As used herein, the term "and/or" includes any and all possible combinations or one or more of the associated listed items, as well as the lack of combinations when interpreted in the alternative ("or").

The terms multi step and multi factor are interchangeably used in this specification and have the same meaning within this specification.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

### BRIEF DESCRIPTION OF THE DRAWINGS

Details and embodiments of the multi step authentication method and system will now be described, by way of example, with reference to the accompanying drawings in which:
Figure 1 illustrates a multi step authentication system used to authenticate a person.
Figure 2 illustrates a schematic diagram of a user device used as part of a multi step authentication system of figure 1.
Figure 3 illustrates a schematic diagram of an authentication server used as part of the multi step authentication system of figure 1.
Figure 4 illustrates an example multi step authentication method to authenticate a person.
Figure 5 shows a further example of a multi step authentication method to authenticate a person.
Figure 6 illustrates a flow chart of the additional steps that define the first authentication process of the multi step authentication method.
Figure 7 illustrates an example flow chart of steps that comprise the second authentication process of the multi step authentication method.
Figure 8 shows an further example second authentication process of the multi step authentication method.
Figure 9 illustrates a further embodiment of a multi step authentication method for authenticating a person.

### DETAILED DESCRIPTION OF THE PREFERRED EMBODIMENT

The present disclosure relates to a multi step authentication method and system, in particular, but not limited to a multi step authentication method and system to authenticate a person as an authorized person.

The multi step method is executed using a multi step authentication system (i.e. a system for authentication). The multi step method as described herein is executed using one or more elements of the system. The multi step method as described herein may also additionally used to identify and authorize a vehicle associated with the person.

In one example embodiment the multi step method comprises the steps of: executing a first authentication phase to authenticate a person or vehicle as an authorized , the first authentication phase comprises performing a first authentication technique; executing a second authentication phase, the second authentication phase comprises performing a second authentication technique, wherein the first authentication technique and second authentication technique are disparate; both the first and second authentication techniques utilize contactless authentication techniques; wherein the second authentication phase is performed after the first authentication phase successfully authenticates a person as an authorized user; a person is authenticated as an authorized person or vehicle if both the first authentication phase and second authentication phase successfully authenticate the person or vehicle, and; wherein the first authentication phase and second authentication phase are sequentially alterable. In one example the first authentication technique comprises a proximity based identification technique, and the second authentication technique comprises an image processing identification technique that identifies an object or person in an image.

In an other example embodiment the multi step method comprises the steps of: determining, at a user device, a location of the user device associated with the user, wherein the location of the user device is determined at the user device using a positioning system; transmitting, by the user device, the location of the user device to an authentication server; processing, at the authentication server, the received location and determining the if the user device is at a predetermined location or within vicinity of a predetermined location; transmitting, by the authentication server, a verification signal to the user device confirming the user device is at a predetermined location or within vicinity of a predetermined location; executing a first authentication process using a first authentication technique in response to receiving a verification signal, wherein the first authentication technique comprises a proximity based identification technique; executing a second authentication process using a second authentication technique in response to receiving a verification signal, wherein the second authentication technique comprises a image processing based identification technique; authenticating, by the authentication server, a person as an authorized person if the user device is identified at a predetermined location or in the vicinity of a predetermined location and the first authentication process determines a successful authentication and the second authentication process determines a successful authentication, and; wherein the first authentication process and second authentication process are sequentially alterable.

In one example embodiment a multi step authentication system i.e. a system for authentication that is used to execute a multi step authentication method, the system comprises: a user device associated with the person; an authentication server; the user device and authentication server in electronic communication, wherein the authentication server is configured for two way communication with the user device; a positioning system, the authentication server and the user device in communication with the positioning system, the user device and/or the authentication server configured to determine a position of the user device or the person based on interaction with the positioning system; one or more transceiver devices, the user device configured to communicate with the one or more transceiver devices; a camera, the camera configured to communicate with authentication server and/or the user device; the user device configured to interact with the transceiver device and the authentication server to execute a first authentication process using a first authentication technique; the user device configured to interact with the authentication and the camera to execute a second authentication process using a second authentication technique; the first authentication technique and the second authentication technique are contactless authentication techniques; the first authentication process and the second authentication process are sequentially alterable and; a person is authenticated as an authorized person or vehicle if both the first authentication process and second authentication process successfully authenticate the person or vehicle. In one example the first authentication technique comprises a proximity based identification technique, and the second authentication technique comprises an image processing based identification technique. In a further example the second authentication technique may be a biometric technique or a facial recognition technique. The first authentication technique may determine a proximity to a transceiver, such as any communication device that may operate without any physical contact for example a wireless device, WiFi terminal, an NFC reader or Bluetooth device.

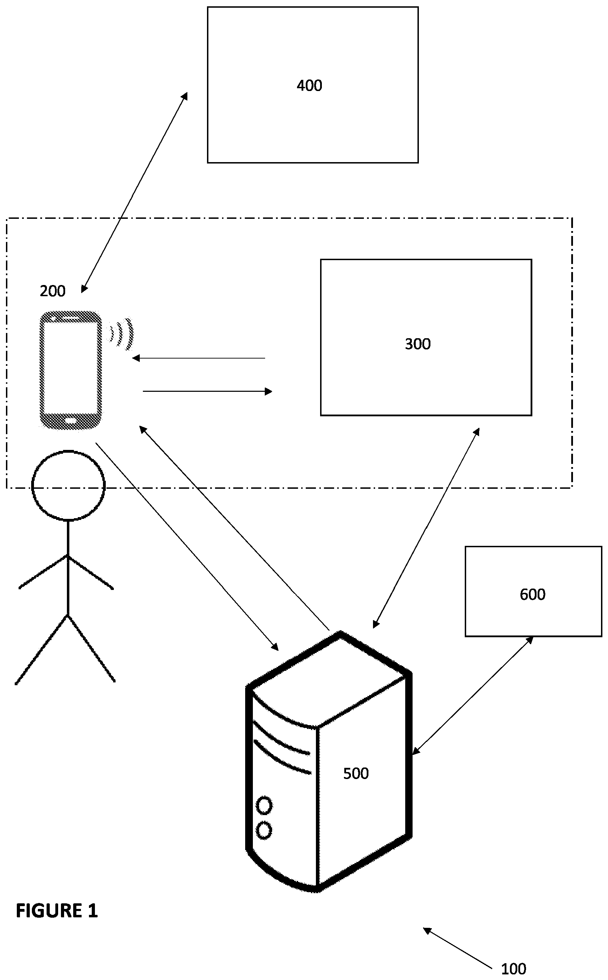

Figure 1 shows an example of an embodiment of an authentication system i.e. a multi step authentication system 100 that can be used to authenticate a person 10 as an authorized person. The system 100 executes a multi step authentication method i.e. a multi factor authentication method to authenticate a person as an authorized person. The system 100 may also be configured to identify and authenticate a vehicle of a person as an authorized person.

Referring to figure 1, the system 100 comprises a user device 200, a transceiver device 300, a positioning system 400 and an authentication server 500. The user device 200 is associated with the person 10. The user device 200 may belong to the person 10. Preferably the user device 200 is a user device such as for example a smartphone, a tablet, a smartwatch, smart glasses or another similar device. The user device 200 preferably comprises a memory, processor, one or more cameras and wireless communication capability. In the illustrated example embodiment of the system 100, the user device 200 is a smartphone. The smartphone 200 comprises at least one camera integrated into the smartphone.

The user device 200 is configured to communicate with the transceiver device 200. The user device 200 may be configured for two way communication with the transceiver device 200 (i.e. the user device can transmit and receive information from the transceiver device). The transceiver device 200 can receive a signal from the user device 200. The transceiver device 200 may also be configured to transmit a signal to the user device 200 in response to receiving a signal. The system 100 may comprise a plurality of transceiver devices 300 that are configured to communicate with the user device 200. The one or more transceiver devices 300 may further be configured to communicate with the authentication server 500. For example, the transceiver device 200 is configured to transmit and receive information from the authentication server 500. The one or more transceiver devices 300, within the system 100, are preferably fixed devices or devices attached to one or more fixtures. The one or more transceiver devices 300 are positioned at predetermined locations.

The one or more transceiver devices may be an active device or may be a passive device. Alternatively, the one or more transceiver devices may include some active and some passive devices. In one example, the one or more transceiver devices comprise Wifi terminals or Wifi routers. The Wifi routers may be arranged as a Wifi network. Alternatively, the transceiver devices 300 may be one or more near field communications (NFC) receiver devices. In a further alternative example configuration the system 100 may comprise one or more Bluetooth receivers that may function as the transceiver device 200 or any other wireless communication device. The user device 200 is configured to wirelessly connect with or wirelessly interact with the one or more transceiver devices 300 when the user device 200 is within a predefined proximity of the transceiver device.

The positioning system 400 is configured to wirelessly connect to and wirelessly communicate with the user device 200. The user device 200 uses the positioning system 400 to ascertain the position of the user device 200. The positioning system 400 is used to ascertain the position, more specifically the location of the person associated with the user device. In this example the positioning system 400 is a global positioning system (GPS). Alternatively, the positioning system 400 may comprise GLONASS or a BDS positioning system. The positioning system 400 comprises the elements of a GPS system e.g. satellites and appropriate GPS servers. The user device 200 comprises a GPS receiver or a GPS communications chip that allows the user device 200 to communicate with the GPS system 130. The user device 200 further comprises a software application that is programmed to control the GPS receiver and the user device 200 in order to calculate the location of the user device 200 using the positioning system 400. Optionally, the user device 200 further uses an assisted global positioning system, wherein the user device also pings cellular towers and calculates a cellular location of the user device to further improve the location determination of the GPS system 130.

The authentication server 500 is a computing device or a computing system that is utilized in authenticating a person as an authorized person. The authentication server 500 may comprise a suitable computer architecture. For example, the authentication server 500 may comprise one or more stand alone computers or processors arranged in a rack. The authentication server 500, may comprise a network of computers or processors. In a further example configuration, the authentication server 500 comprises a cloud based server i.e. a server cluster that is accessed by the user device. In another example, the authentication server 500 may be a webserver. The authentication server 500 and the user device 200 each comprise a communication module e.g. a communication chip or communication ASIC. The user device 200 and the authentication server 500 are configured to communicate with each other using a cellular network such as for example as GSM network or a GPRS network or a EDGE network, and use a suitable communication protocol.

The authentication server 500 is configured to communicate with the positioning system 400 and the transceiver device 200 (i.e. the one or more transceiver devices). The authentication server 500 is configured to communicate with the positioning system 400 using a suitable wireless communication network e.g. a cellular network and a wireless communication protocol.

Referring to figure 1, the system 100 may optionally further comprise a camera 600. In one example the camera may be stand-alone camera. For example, the camera 600 may be a security camera that is used to capture still images or a video stream. The system 100 may comprise a plurality of security cameras forming a network of cameras. The camera 600 or cameras are electronically coupled to the authentication server 500. Preferably the camera 600 or cameras are in wireless communication with the authentication server 500. The authentication server 500 is configured to receive image data or video streams from the camera 600. The authentication server 500 is further configured to transmit a signal to the camera 600 or cameras. The authentication server 500 is configured to selectively activate the camera 600. The authentication server 500 may further be configured to selectively activate one or more cameras as required. The user device 200 may also be configured to communicate with the camera 600 or cameras.

Alternatively, the system may only use the integrated camera of the user device 200. The stand-alone camera is an optional element of the authentication system 100. The camera utilized within the authentication method may be the camera within the user device.

The system for authentication 100 (i.e. the multi step authentication system) is preferably used to implement a multi step(i.e. multi factor) authentication method. The user device 200 configured to interact with the transceiver device 130 and the authentication server to execute a first authentication process using a first authentication technique. The user device 200 configured to interact with the authentication and the camera to execute a second authentication process using a second authentication technique. The first authentication technique and the second authentication technique are contactless authentication techniques. The authentication techniques are contactless such that the person is not required to contact any element of the system 100 in order be authenticated as an authorized person.

The first authentication process and the second authentication process are sequentially alterable and; a person is authenticated as an authorized person if both the first authentication process and second authentication process successfully authenticate the person. The first authentication technique comprises a proximity based identification technique, and the second authentication technique comprises an image processing based identification technique.

When considering the embodiments as shown in Figure 1, it is to be understood that in some embodiments, data obtained, processed or stored by any one device may be replicated, stored or processed in another device. As different electronic devices may have processing, communication and storage capabilities, certain processing functions or data storage may be interchangeably performed by any one or more of the devices.

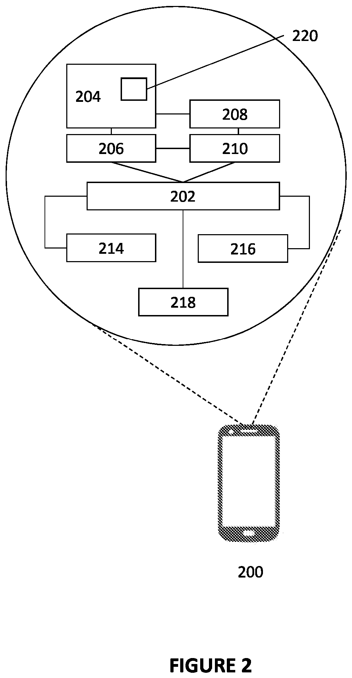

Figure 2 illustrates a schematic diagram of the an example user device 200 (i.e. a mobile device). In the illustrated example, the user device is a smartphone. Referring to figure 2, the user device 200 (i.e. a mobile device) comprises suitable components necessary to receive, store, process data and execute appropriate computer instructions. The user device comprises a processor 202. The processor 202 is a suitable processor e.g. a microprocessor or an ASIC or an FPGA. The processor 202 is configured to execute computer readable and executable instructions stored in a memory unit. The user device 200 further comprises a ROM unit 204, a RAM unit 206 (e.g. a volatile memory) and flash memory 208. Alternatively, the user device 200 may comprise any combination of one or more of a ROM unit, RAM unit and flash memory. The user device 200 comprises an operating system stored in ROM e.g. Android or iOS or any other suitable operating system.

The user device 200 further comprises a communication unit 210 that includes electronic components and circuitry to allow communication via multiple communication networks using various communication protocols e.g. 4G, 5G, Wifi, Bluetooth etc. Additionally, the user device 200 may include multiple communication units (not illustrated). Each separate communication unit is configured to provide a single communication protocol. The user device comprises a user interface 240 that is configured to present information to a user and receive inputs from a user. The communication unit 210 allows the user device 200 to link with localized networks such as for example Wifi or other LAN networks. The communication unit may be connected to an external computing network through a telephone line or other type of communications link. The communication unit 210 allows the user device (i.e. a mobile device) to connect to cellular networks and communicate across the cellular network with at least the authentication server 500. Optionally the user device 200 may be configured to communicate with the transceiver device 300 and the positioning system 400 via the communication unit 210.

The user device may optionally comprise a tag reader unit 214. The tag reader unit 214 comprises electronic circuitry configured to allow the user device to interact with a NFC tag and receive data from an NFC tag. The tag reader unit 214 is an NFC tag reader. The tag reader 214 comprises an antenna (i.e. a coil) a microcontroller, a power management unit and conditioning circuitry. The tag reader 214 comprises components that are commercially available in NFC enabled smartphones. These components and functions come inbuilt with smartphones.

The user device 200 may optionally include an encryption module 216. The encryption module 216 may be a microprocessor or an integrated circuit or may be a software module that is stored in a memory e.g. ROM 204 and executed by the processor when required. The encryption module 216 is configured to encrypt and decrypt data using AES 128-bit encryption. The user device 200 may further comprise a code generator unit 218 that is configured to generate a code or meta data related to an image. The code generator may be a microprocessor or an integrated circuit. Alternatively the code generator 218 may be a software module that includes instructions, that cause the processor to generate a code.

The user device 200 further comprises a software application 220 (an app) that is stored in memory e.g. ROM 204. The application (app) 220 defines steps for multi step authentication method to authenticate a person, as computer readable and executable instructions. The app defines instructions that are configured to be executed by the processor 202 to cause the mobile device 200 to execute the steps of a the multi step authentication method.

Preferably the user device 200 comprises a camera 600 that is integrated into the user device 200. The camera 600 is configured to capture images. The camera 600 is configured to capture still images or a plurality of images or video stream (i.e. moving visual images). The camera 600 is controllable by the processor 202. The images or video stream captured by the camera 600 may be processed by the processor 202 or may be stored in a memory unit of the user device 200. The images or video stream captured by the camera can also be transmitted by the user device to the authentication server 500 via a suitable communication protocol.

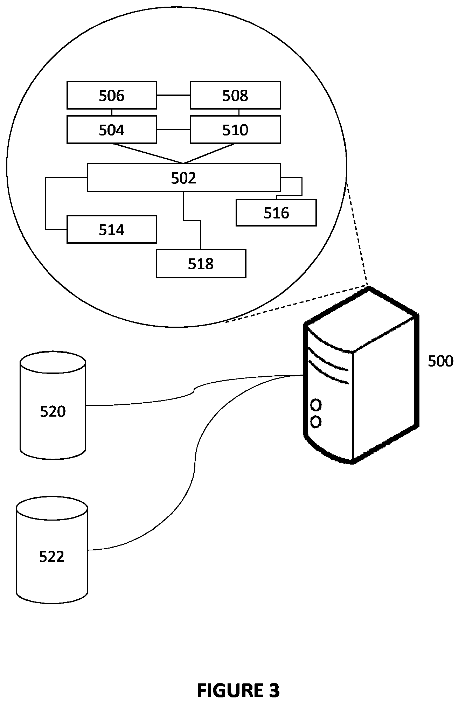

Figure 3 shows a schematic diagram of the authentication server 500 and its components. The server 500 comprises components necessary to receive, sore and execute appropriate computer instructions. The authentication server 500 comprises at least a processor and an associated memory unit or a plurality of memory units. The components may include a processor 502 (i.e. a processing unit), read-only memory (ROM) 504, random access memory (RAM) 506, and input/output devices such as disk drives 508, input devices 510 such as an Ethernet port, a USB port, etc. The server 500 further comprises communications links 514 i.e. a communication module that is configured to facilitate wireless communications via a communication network. The communication link (i.e. a communication unit) 514 allows the server 500 to wirelessly link to a plurality of communication networks. The communication link 514 may also allow the server to link with localised networks such as for example Wi-Fi or other LAN (local area networks). At least one of a plurality of communications links may be connected to an external computing network through a telephone line or other type of communications link. The communications link 514 allows the server to connect to cellular networks and communicate across the cellular network with a plurality of mobile devices including mobile device 200. The communication link 514 may comprise a communication unit e.g. a chip or electronic module that comprises electronic circuitry and components to provide communication functionality to the server 500.

The processor 502 may comprise one or more electronic processors. The processors may be microprocessors or FPGAs or any IC based processor. In one exemplary construction the processor 502 comprises a plurality of linked processors that allow for increased processing speed and also provide redundancy. In some instances, the processor 502 may include adequate processors to provide some redundant processing power that can be accessed during periods of high need e.g. when multiple functions are being executed.

The server 500 may include storage devices such as a disk drive 508 which may encompass solid state drives, hard disk drives, optical drives or magnetic tape drives. The server 500 may use a single disk drive or multiple disk drives. The server 500 may also have a suitable operating system which resides on the disk drive or in the ROM of the server 500. The operating system can use any suitable operating system such as for example Windows or Mac OS or Linux.

The server 500 comprises an encryption module 516. The encryption module 516 is a hardware module e.g. an ASIC or an integrated chip or a microprocessor that is configured to receive data and output encrypted data either to the processor 502 or to a memory unit. Alternatively, the encryption module 516 may be a software module or a software service that includes instructions that can cause the processor 502 to encrypt data. The encryption module is configured to encrypt data using AES 128-bit encryption.

The server 500 further comprises a code generator unit 518. The code generator unit 518 may be a hardware unit e.g. a microprocessor or an ASIC or an integrated circuit that includes electronic components and may optionally also include software and/or firmware. The code generator unit 518 is configured to generate a code in response to an appropriate signal. The code generator 518 may be configured to generate a code that comprises a series of numerals or alphanumeric characters or alphabets or any other characters. Alternatively, the code generator 518 may comprise a software program that is stored in a memory unit of the server 500. The software code generator may comprise computer readable and executable instructions that are executable by the processor 502 in order to generate a code.

The server 500 may comprise an authorized personnel database 520. The authorized personnel database stores the identities and information related to authorized people. These authorized people are people who would be authenticated as approved people by the authentication method. The authorized personnel database is configure to store at least a person's name, the identity of an associated user device (i.e. mobile device), type of access that person is allowed and other key information. The authorized personnel database further comprises a code that is stored in the database 520, wherein each unique code is associated with an authorized personnel. Optionally, the authorized personnel database 520 may also store meta data associated with an image of an authorized person.

The server 500 may further comprise an image database 522 that stores images of authorized personnel. The image database 522 is an optional element. In a preferred form the server 500 does not include an image database 522. The illustrated form shown in figure 2, the server 500 comprises an image database. The image database 522 may be a relational database. The image database 522 preferably includes images of faces of authorized personnel. The images are related to an identity of an authorized person. Further each stored image in the image database 522 may be related or linked with information from the authorized personnel database 520. Alternatively, the images of authorized personnel may be stored within the authorized personnel database 520.

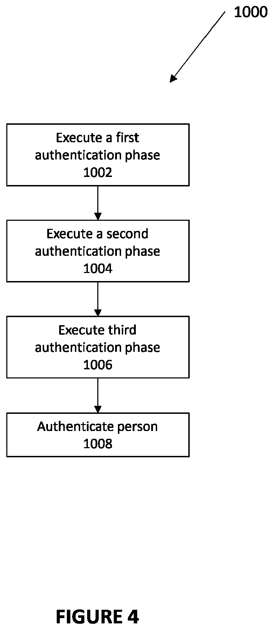

Figure 4 shows an example embodiment of a multi step authentication method 1000. The method 1000 can be executed using the system 100 described earlier. Referring to figure 4, the multi step authentication method comprises a first step 1002. Step 1002 comprises executing a first authentication phase to authenticate a person as an authorized , the first authentication phase comprises performing a first authentication technique. Step 1004 comprises executing a second authentication phase, the second authentication phase comprises performing a second authentication technique. The first authentication technique and second authentication technique are disparate; both the first and second authentication techniques utilize contactless authentication techniques. The second authentication phase is performed after the first authentication phase successfully authenticates a person as an authorized user.

The first authentication phase and second authentication phase are sequentially alterable. Step 1006 comprises executing a third authentication phase, the third authentication phase comprises a third authentication technique, wherein the third authentication technique comprises a location identification technique, and; the first, second and third authentication phases are sequentially alterable. A person is authenticated by the third authentication phase if the person is identified as being in a predefined location. Step 1008 comprises authenticating a person as an authorized person if both the first authentication phase and second authentication phase successfully authenticate the person or vehicle. The user is authenticated (i.e. identified )as an authorized person if the first, second and third authentication phases are successful.

The first authentication technique comprises a proximity based identification technique, and the second authentication technique comprises an image processing identification technique that identifies an object or person in an image.

The first authentication phase further comprises the following additional steps: wirelessly interacting with at least one transceiver device via a user device associated with the person or vehicle. Receiving a verification signal from the at least one transceiver device at the user device, wherein the verification signal confirms the user device has successfully interacted with the at least one transceiver device. The first authentication phase further comprises calculating proximity of the user device to the at least one transceiver device at the user device. The method further comprises determining the user device as successfully authenticated if the user device is within a predetermined proximity of the at least one transceiver device; and transmitting, to the authentication server, meta data related to the user if the user device is determined as authenticated.

The second authentication phase further comprises the following additional steps: capturing an image of a person or vehicle, or capturing an image of a portion of the person or vehicle, by the camera 600. Transmitting the captured image to the authentication server 500. Processing, at the authentication server 500, the captured image to identify a person or vehicle within the captured image, wherein the person or vehicle are identified by applying an object recognition technique. Determining, at the authentication server 500, if the identified person or vehicle within the image substantially matches an approved person or vehicle. The person or vehicle is determined as an authorized person or vehicle if the identified person or vehicle within the image substantially matches the approved person or vehicle.

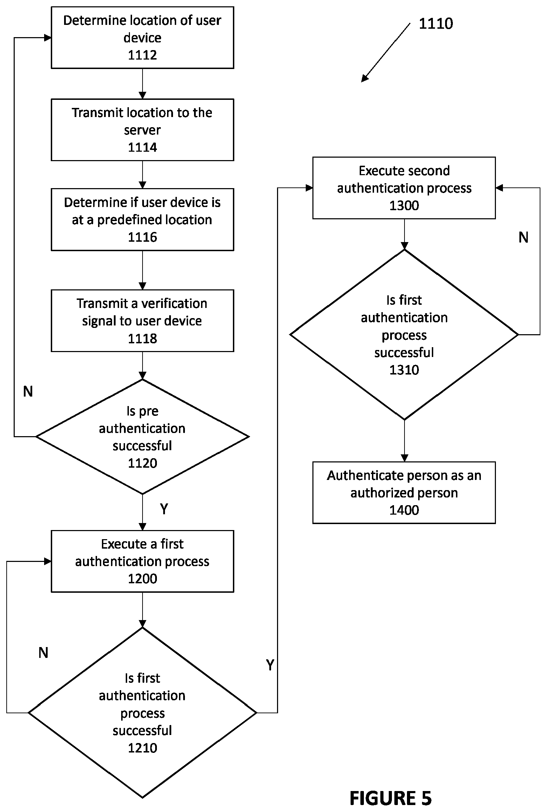

Figure 5 illustrates a further embodiment of a multi step authentication method 1110. The multi step authentication method 1110 is executed by the authentication system 100. Referring to figure 5, the method 1110 commences at step 1112. Step 1112 comprises determining, at a user device, a location of the user device associated with the user, wherein the location of the user device is determined at the user device using a positioning system 400. The positioning system 400 is preferably a GPS system. Step 1114 comprises transmitting, by the user device 200, the location of the user device to an authentication server 500. Step 1116 comprises processing the received location and determining, at the authentication server 500, if the user device 200 (and the person 10) is at a predetermined location or within a vicinity of a predetermined location. The predetermined location is predefined within the authentication server 500. Step 1118 comprises transmitting a verification signal from the authentication server 500 to the user device 200 confirming the user device is detected at a predetermined location or within vicinity of a predetermined location. Steps 1114 to 1118 define a pre-authentication process i.e. a third authentication process.

At step 1120 the method determines if the pre-authentication process is successful i.e. if the user device is detected at the predetermined location. The method progresses to step 1200 if the pre-authentication process is successful. If the pre-authentication process is unsuccessful, the method returns to step 1112.

Step 1200 comprises executing a first authentication process using a first authentication technique in response to receiving the verification signal. The first authentication process comprises a proximity based identification technique. The first authentication process determines the proximity of the user device 200 to a fixed transceiver device. Step 1210 comprises determining if the first authentication process is successful. If YES, then the method proceeds to step 1300. If NO, the method repeats step 1200.

Step 1300 comprises executing a second authentication process using a second authentication technique in response to receiving a verification signal. The second authentication technique comprises a image processing based identification technique. Step 1310 comprises checking if the second authentication process is successful. If YES, the method proceeds to step 1400. If NO, step 1300 is repeated. Step 1300 may be repeated for a predefined number of attempts. For example, 3 to 5 attempts but other number of attempts are also contemplated. If the second authentication process is unsuccessful for the predefined number of attempts, the person associated with the user device is not authenticated and is denied access.

Step 1400 comprises authenticating the person as an authorized person, at the authentication server, if the user device is identified at a predetermined location or in the vicinity of a predetermined location and the first authentication process 1200 determines a successful authentication and the second authentication process 1300 determines a successful authentication. The first authentication process and the second authentication process are sequentially alterable. Either process can be performed before the other. In one example both the first and second authentication process may be performed simultaneously by interaction between the user device 200 and the authentication server 500.

Optionally the method 1000 comprises the additional steps of: transmitting, by the authentication server, an activation signal to activate a fixed camera if the first authentication process is successful. Capturing, by the camera, an image of an object associated with the person. The object may be any object. For example the object is a vehicle. The method further comprises the step of transmitting, by the camera, the captured image to the authentication server. The camera is configured to capture a number plate or an image of the vehicle. Processing, by the authentication server, the captured image by applying an object recognition technique to the captured image to identify one or more structural features or alphanumeric characters located within the captured image. For example the authentication server is configured identify the license plate number of a vehicle. The authentication server is configured to compare the identified license plate with an authorized license plate associated with an authorized person. The authorized license plate may be stored in the authentication server memory unit. If the identified license plate matches the authorized license plate, the person is authenticated.

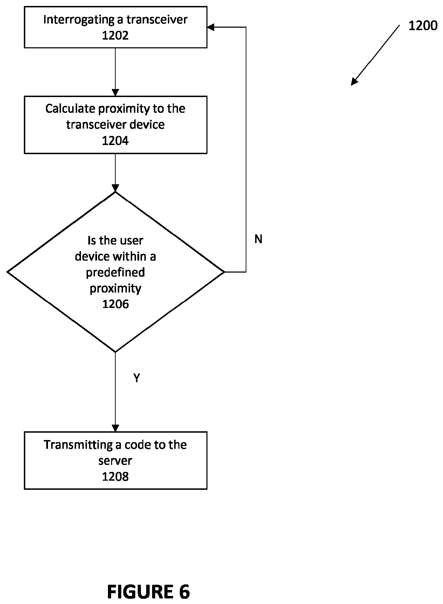

Figure 6 illustrates a flow chart of the additional steps that define the first authentication process 1200. Referring to figure 12 the first authentication process comprises step 1202. Step 1202 comprises interrogating, by the user device 200, the transceiver device 300. The transceiver device may be a Wifi module (i.e. Wifi terminal) such as for example a Wifi router that is fixed at a position. The transceiver device 300 may also be a Bluetooth transceiver or an NFC receiver unit. The transceiver 300 is preferably located at a predetermined location.

Step 1204 comprises calculating, by the user device 200, a proximity of the transceiver device from the user device 300. The user device is deemed authenticated if the user device 200 is calculated to be within a predefined proximity to the transceiver device. The user device 200 is configured to estimate the distance of the user device 200 (i.e. a mobile device) from the transceiver device 300. For example the user device 200 is configured to estimate the distance between the user device 200 and a Wifi SSID. Alternatively, the user device 200 is configured to estimate proximity to a Bluetooth receiver 300 that the user device 200 pairs with. The transceiver is positioned at a predetermined location.

Step 1206 comprises determining if the user device is within a predefined proximity. If YES, then the user device 200 is deemed as authenticated and the method proceeds to step 1208. If NO, then the method returns to step 1202 and repeats steps 1202 to 1206. Step 1208 comprises transmitting, by the user device 200, to the authentication server a code, wherein the code is a unique code. The code corresponds to the person. The code may be a number or a series of letters or alphanumeric characters or any other format.

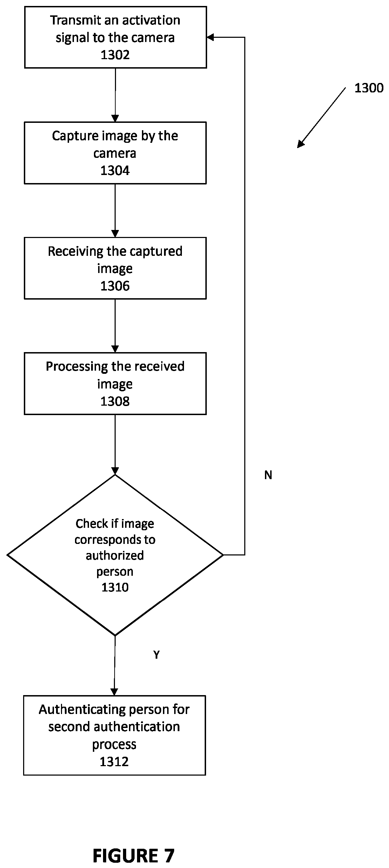

Figure 7 shows an example flow chart of steps that comprise the second authentication process 1300. Referring to figure 7, the second authentication process comprises step 1302. Step 1302 comprises transmitting, by the authentication server, an activation signal to a camera to activate the camera if the first authentication process results in a successful authentication of the person. Step 1304 comprises capturing an image of the person by the camera 600. Step 1306 comprises receiving, at the authentication server 500, the captured image. The camera 600 may be a camera that is integral to the user device or a separate camera. Step 1308 comprises processing the captured image at the authentication server 500. The authentication server 500 is configured to apply object recognition technique to the captured image to identify the person within the image. The object recognition technique applied by the server 500 comprises analyzing the received image to identify various features. Some example of object recognition techniques utilized by the authentication server may include one or more of edge matching, three dimensional recognition, skin texture analysis or another suitable object recognition technique.

Step 1310 comprises checking, at the authentication server 500, if the identified person within the captured image corresponds to an authorized person stored within the authentication server or within an image database. The person is deemed authenticated if the identified person within the captured image corresponds to an authorized person stored within an image database. If the image corresponds to the authorized person or if the authorized person is identified in the image, the method comprises step 1312 of authenticating the person for the second authentication process.

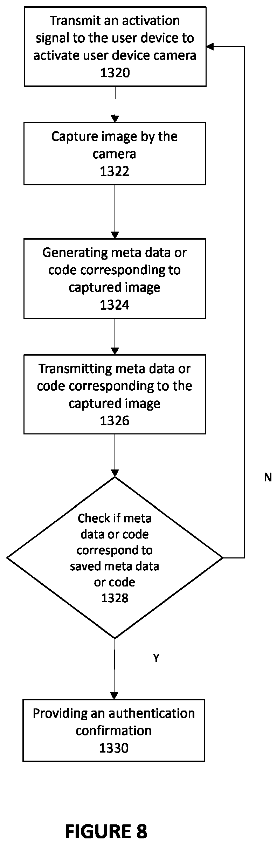

Figure 8 shows alternative steps that comprise the second authentication process 1300. Figure 8 illustrates a preferred second authentication process that is utilized within the multi step authentication method 1000. The second authentication process uses a second authentication technique that comprises an image processing based identification technique. The second authentication process 1300 commences at step 1320. Step 1320 comprises transmitting, by the authentication server 500, an activation signal to the user device 200 to activate the integrated camera if the first authentication process results in a successful authentication of the person. Step 1322 comprises capturing an image of the person by the user device camera. Step 1324 comprises processing, at the user device 200, the captured image to generate meta data or a code associated with the captured image. Step 1326 comprises transmitting, by the user device 200, the meta data or transmitting a code associated with the meta data to the authentication server 500. Step 1328 comprises comparing, at the authentication server 500, the received meta data with stored meta data or comparing the received code with a stored code. The person is deemed authenticated if the received meta data from the user device corresponds substantially to the stored meta data or if the received code substantially corresponds to the stored code. If step 1328 results in a no i.e. the meta data or code don't correspond, the method returns to step 1320. If step 1328 returns Yes, the method moves to step 1330. Step 1330 comprises transmitting a confirmation of authentication to the user device from the server 500.

The authentication server 500 is further configured to abandon the authentication method i.e. stop authentication or reset if there is a long time delay between receiving an image or code from the user device following successful authentication at the first authentication process. The authentication server 500 comprises a timer that is activated when the first authentication process is successful. For example the authentication server 500 defines a predefined time limit e.g. 1 minute or 30 seconds or any time limit. The authentication server 500 resets or stops the authentication method if the code or image from the user device is not received within the predefined time limit.

In an example embodiment, it may be more suitable in certain implementations to adapt the above embodiments of the authentication process such that steps 1324, 1326, 1328, and 1330 are performed without the authentication server, but rather with the user device itself. In these examples, a predetermined token, issued by an authentication party and may include information similar to the stored meta data or code as mentioned above, can be placed and stored on the user device when the user device is set up for use.

In turn, when the user is authenticated by the user device, the meta data or code corresponding to the captured image can be compared and checked for correspondence with the token on the user device before authentication is confirmed.

These example embodiments may be advantageous as it simplifies the authentication process by using the user device's own authentication functions to be part of the overall authentication process. As an example, a company can enrol an employee at an enrolment station where a human resource staff or other automated method (eg checking passports or drivers license) is used to confirm the identity of the employee. Then, the company can then place a token on the employee's phone stating that the employee is now authorized and providing details on the keys of what the employee has access to. As an example, the employee may be authorized to access certain facilities of the company but not others. For example, the employee may be authorized to access the warehouse, but not the accounts department.

When this employee wishes to enter a facility of the company, the employee may start an "app" on his or her user device (smartphone). In turn, the employee will show his or her face to the camera on the phone. The camera authenticates the employee and the phone then identifies and communicates with the server at the access point. This server receives the token from the employee's phone which states which facilities of the company that the employee may validity access. If the employee had just taken a picture of himself or herself and that this shows that he or she is the authorized user of the phone, and the token will show that the facilities that he or she is authorized to access, then the server can provide or deny the access as requested.

The advantages shown in this example is that the authentication of the user's identity can be performed by the user's phone, whilst access can simply be granted or denied by the server. This would simplify an implementation of the authentication processes.

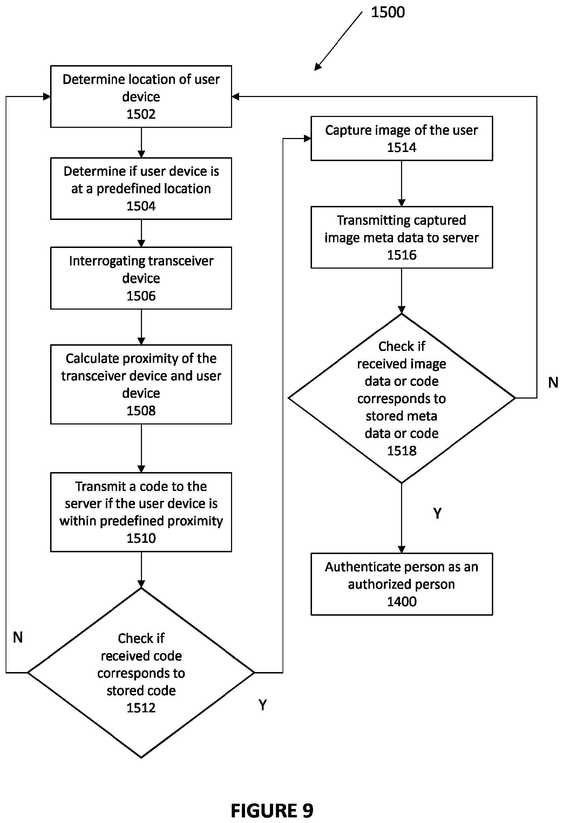

Figure 9 illustrates a further embodiment of a multi step authentication method 1500 for authenticating a person. The method 1500 commences at step 1502. Step 1502 comprises determining a location of the user device (and the associated person. The user device 200 communicates with the positioning system 400 and calculates the location of the user device. Step 1504 comprises determining if the user device is at a predefined location. The method moves to step 1506 if step 1504 is successful i.e. the user device is detected at the predefined location. Step 1506 comprises interrogating a transceiver device by the user device 200. Step 1508 comprises calculating a proximity of the user device to a transceiver device. The user device is deemed authenticated if the user device is calculated to be within a predefined proximity to the transceiver device. Step 1510 comprises transmitting a code to the authentication server 500. The code is preferably encrypted. Step 1512 comprises checking if the received code matches a stored code that corresponds to an authorized person. Step 1514 comprises capturing an image of the user by the camera of the user device. Step 1514 is only executed if step 1512 is successful i.e. if the received code matches the stored code.

Step 1516 comprises transmitting image meta data to the authentication server. Step 1518 comprises comparing the received meta data with the stored meta data, wherein the meta data is related to a stored image at the server. If the received meta data matches the stored meta data, the person is authenticated as an authorized person. In this embodiment of the method, meta data may comprise a code. Preferably the meta data or code are encrypted prior to transmission. If step 1518 fails, the method goes back to step 1502.

The multi step authentication method 1500 is advantageous because no image data is sent over the internet to the authentication server. This eliminates risk of the authentication server being hacked and loss of images. This reduces risk of personal information being lost. Further the person holds data about the data on the person's own device. There is no need for an image database . There is also no requirement to synchronize databases which reduces the complexity of the authentication system.

The described multi step authentication method 1000, 1500 , and authentication system are also advantageous because it combines two contactless authentication techniques. The two different authentication techniques are separate and different to each other. The authentication method is at least a 2 factor authentication which provides improved security as compared to using an access card. The method and system are advantageous because access does not require any contact or cooperation from a person. The method can also improve the speed of authentication because the person does not need to interact with any specific devices by contacting the devices.

As part of the multi step authentication method, a person undergoes an enrollment process. In the enrollment process information about the person is stored within the server 500. Information such as for example the person's name, role, identity of the user device, the level of authorization. As part of the enrollment process an image of the user's face is captured. Preferably the image of the person's face is converted into meta data and stored. The enrollment process is executed by the user device. The metadata and other information related to the person may be converted into an encrypted code and stored within the user device.

An example use case of the multi step authentication method will now be described. A large organization with multiple office locations and several employees can utilize the multi step authentication method and system 100 as described to authenticate and control access to an office premises for multiple persons. As the person i.e. user approaches the office premises a pre-authentication is performed. The pre-authentication comprises receiving location coordinates of the user device using a positioning system e.g. a GPS system. The location information is transmitted to the authentication server. When the user device is identified to be at a predefined location, the pre-authentication is successful.

Optionally the person can capture an image of the person's license plate. If the license plate identified in the image matches an enrolled license plate, then one authentication is successful.

As the person walks toward the office premises the user device initiates a first authentication process by interrogating one or more transceiver devices located within the office premises. For example the user device interrogates Wifi terminals and picks up a Wifi SSID of the organization. The user device calculates proximity to the Wifi terminal. The user device transmits a unique code or a unique identity to the authentication server when the user device is detected to be at a predefined proximity to the Wifi terminal. The proximity of the user device may be calculated relative to a single transceiver e.g. Wifi terminal or may be relative to multiple Wifi terminals. The user device may use a triangulation method to determine proximity of the user device to the Wifi terminals. The user device is authenticated as part of the first authentication process if the user device is detected within a predefined proximity. There can be several employees within a predefined proximity and each of the associated user devices may transmit their codes or identities to the authentication server. The authentication server is configured to communicate with multiple user devices.

A second authentication process is initiated if the first authentication process is successful. The authentication server activates one or more fixed cameras to capture faces of persons that have been authenticated by the first authentication process. The fixed camera may be located near an access point like a gate. The camera is positioned such that access is restricted through a gate, and the gate only being opened if the first and second authentication processes are successful. This prevents unauthorized access. As part of the second authentication process the server activates the camera to capture images of the faces of various persons. The images from the camera are received at the authentication server. The authentication server compares the received image with meta data received from the code from the first authentication process. If the match is successful then the person is authenticated as part of the second authentication process. A person is only allowed access if both authentication processes are successful.

In a further use case the multi step authentication method and system can be used to control access to large institution such as for example a university. Access to parts of the university can be controlled using the multi step authentication method. A person e.g. a student is enrolled with the authentication server. The enrollment process comprises creating a user profile that stores the student's name, level of access within the university, image meta data related to an image and a code that includes the image meta data and user device identity. The code is transmitted to the user device.

A first authentication process is executed as the student approaches a room or a gate at the university. The user device of the student interacts with one or more transceiver devices e.g. Wifi terminals or Bluetooth receivers. A proximity of the user device to the transceiver device is calculated. Once the user device is determined to be within a predefined proximity. The user device transmits the code to the authentication server. The first authentications process is considered successful if the code is received at the authentication server. Following a first authentication process a second authentication process is initiated. The user device camera is activated. The person's face is captured as an image. The code including image meta data is transmitted to the authentication server. The authentication server is configured to compare the received code with the stored code. Alternatively, the server compares the stored meta data with the received meta data. If there is a match, the second authentication process is considered successful. The person is authenticated as an authorized person and allowed access.

The described multi step authentication method can be used in large access control systems for large organizations. For example, the method can be used for organisations with multiple offices. Such large organisations want their employees to get access to any location or office within the organization. The method is advantageous because it is more secure than using an ID card or access card. Further the system does not need a large database that needs to be constantly updated with images of new users each time a new user is enrolled. A standard two factor authentication system would require a database at each location. These various databases are required to be updated and synchronized. The current system and method of authentication does not require maintenance of multiple synchronized databases because the user holds data on the user device, and only meta data is held at the server.

In alternative usage scenario, the multi step authentication method and system can be used for visitor management at a facility. For example, a visitor may contact his host for a pass to enter his facility and provide all his details including his phone number and a picture of his face, and with all these personal details and the image showing his face, the enrolment process may be done remotely which is different from the previously described examples. Then, the host may check these details and then send an app to the visitor's mobile device. This app, when installed in the visitor's mobile device, become a module that includes the person's meta data, and the app may further set up to operate for a limited period of time, e.g. for half a day from time of entry or a certain time period set by the host or the facility management. After successful enrolment and storage in the meta data with the unique ID in the visitor's mobile device, when the visitor arrives at the facility the system would grant access just as it would for employees or students in the previous examples.

Further such systems that require multiple databases can be hacked or if the communication network is down then synchronization can be delayed and access control can be disabled or disrupted. The described multi step authentication method is advantageous because the individual owns their own data and reduces the likelihood of compromise in the data. Further the described authentication method uses a combination of proximity based authentication and image recognition based authentication to provide a robust authentication method that is difficult to circumvent. The described authentication method provides a multi factor authentication method and provides a system that simpler in architecture than other systems where large sized image databases are required.

The described authentication method or methods are also advantageous because they utilize contactless authentication techniques. A person is not required to sign in or swipe an access card etc. Therefore the described authentication method can be applied across multiple people simultaneously. Further the described authentication method provides the advantage of being able to authenticate a single person from a crowd of people, making the system accurate and robust. As contactless authentication processes are generally much faster than a standard contact authentication system, such as a standard biometric authentication system, the authentication method may allow for fast and efficient authentication of large numbers of users.

In a further use case the multi step authentication method and system can be used in diseases prevention and public health control. This may include controlling access to various restricted area in hospitals or healthcare centres, premises with higher risks of disease outbreak, and even different countries or regions in cross-border travels. For example, access may be granted only to enrolled individuals who are vaccinated, or recently being granted with a "health code" which shows that the enrolled person is not a carrier of certain disease, such as but not limited to COVID-19 and coronavirus diseases.

In this example, the enrolment procedure may be similar to the previous embodiments, in which a person, after receiving vaccination, is enrolled with the authentication server. The enrollment process comprises creating a user profile that stores the vaccinated person name, vaccination details including types and doses of vaccines, vaccination date(s), image meta data related to an image captured by the camera during enrollment and a code that includes the image meta data and user device identity. The code is transmitted to the user device. In an alternative embodiment, the enrollment may instead record a virus/antibody test result and the testing date instead of details of vaccination if the person takes a test instead of receiving vaccination.

After the enrollment, the vaccinated person is granted with a "vaccine passport" or a "health code" which allows him/her access to different restricted areas/regions, simply by carrying along the enrolled device that stores the code and/or the meta data. Optionally, an expiry date of the vaccine passport or the health code may be included in the meta data stored in one or both of the user device and the authentication server, or the expiry of the passport may be determined upon authentication as different countries may enforce different local/regional laws and regulations, which means the expiry dates may be calculated differently.

In a first usage scenario of the vaccine passport or the health code being granted, a person may be authenticated at a port before boarding. Similar to the previous examples, a first authentication process is executed as the traveler approaches the boarding gate. The user device of the traveler interacts with one or more transceiver devices e.g. Wifi terminals or Bluetooth receivers. A proximity of the user device to the transceiver device is calculated. Once the user device is determined to be within a predefined proximity. The user device transmits the code to the authentication server. The first authentications process is considered successful if the code is received at the authentication server. In addition, other policies or rules such as a valid period of the vaccine passport, or the types of recognized vaccination may be implemented to determine if the user of the device should be granted with an access.

Following a first authentication process a second authentication process is initiated. The authentication server activates one or more fixed cameras at the boarding gate to capture the face of the traveler that have been authenticated by the first authentication process. The images from the camera are received at the authentication server. The authentication server compares the received image with meta data received from the code from the first authentication process. If the match is successful then the person is authenticated as part of the second authentication process. A person is only allowed access if both authentication processes are successful.

Alternatively, in some ports with simpler infrastructures, access at the gates may be controlled manually. In this example, the user device camera or a dedicated device camera controlled by an immigration officer, may be activated. The person's face is captured as an image. The code including image meta data is transmitted to the authentication server. The authentication server is configured to compare the received code with the stored code, or the server compares the stored meta data with the received meta data. If there is a match, the second authentication process is considered successful. The person is authenticated as an authorized person and allowed access.

In a second usage scenario of the vaccine passport or the health code being granted, a person may be authenticated at an entrance of certain premises, such as a shopping mall, a conference hall, a restaurant, an office building, a hotel or a university. Similar to the previous examples, the vaccine passports and/or the health codes of individuals at the entrances have to be verified before they can access to these area or premises. Alternatively, the gate may be deployed at an exit of a lockdown area, in which individuals with a valid vaccine passport or health code may leave the area after being authenticated.

In yet another usage scenario, medical or healthcare practitioners may only access to certain restricted area in a hospital or rehabilitation centre with a valid vaccine passport to protect these practitioners from being infected by certain diseases.

These embodiments may be advantageous in that the authentication of "healthy" individuals who have received vaccination and/or virus tests can be performed at different locations or even in different countries as the enrolment process may be completed once the person receives vaccinations or virus test in a hospital or a healthcare facility. Management of database of vaccination or virus test results may be centralized therefore it is not necessary to maintain a separate sets of data being stored in local facilities. In addition, centralized management of sensitive medical information of individuals may further enhance the protection of privacy of individuals.

It will be appreciated by persons skilled in the art that numerous variations and/or modifications may be made to the present invention as shown in the specific embodiments without departing from the scope of the invention as broadly described. The present embodiments are, therefore, to be considered in all respects as illustrative and not restrictive.

It will also be appreciated that where the methods and systems of the present invention are either wholly implemented by computing system or partly implemented by computing systems then any appropriate computing system architecture may be utilized. This will include stand-alone computers, network computers and dedicated hardware devices. Where the terms "computing system" and "computing device" are used, these terms are intended to cover any appropriate arrangement of computer hardware capable of implementing the function described.

Depending on the embodiment, certain acts, events, or functions of any of the algorithms, methods, or processes described herein can be performed in a different sequence, can be added, merged, or left out altogether (for example, not all described acts or events are necessary for the practice of the algorithms). Moreover, in certain embodiments, acts or events can be performed concurrently, for example, through multi-threaded processing, interrupt processing, or multiple processors or processor cores or on other parallel architectures, rather than sequentially.

Although not required, some aspects of the described embodiments (e.g. some of the authentication processes) can be implemented as an Application Programming Interface (API) or as a series of libraries for use by a developer or can be included within another software application, such as a terminal or personal computer operating system or a portable computing device operating system. Generally, as program modules include routines, programs, objects, components and data files assisting in the performance of particular functions, the skilled person will understand that the functionality of the software application may be distributed across a number of routines, objects or components to achieve the same functionality desired herein.

## Claims

1. A multi step authentication method for authenticating a person as an authorized person, the multi step authentication method being executed by a multi step authentication system including an authentication server, a user device, the method comprising the steps of:
- executing a first authentication phase, the first authentication phase comprises performing a first authentication technique;
- executing a second authentication phase, the second authentication phase comprises performing a second authentication technique, wherein the first authentication technique and second authentication technique are disparate; both the first and second authentication techniques utilize contactless authentication techniques;
wherein the second authentication phase is performed by
transmitting, by the authentication server, an activation signal to the user device to activate the camera integral to the user device if the first authentication process results in a successful authentication of the person,
processing, at the user device, the captured image to generate meta data or a code associated with the captured image,
transmitting, by the user device, the meta data or transmitting a code associated with the meta data to the authentication server for comparing the received meta data with stored meta data or comparing the received code with a stored code.

2. A multi step authentication method in accordance with claim 1, wherein the first authentication technique comprises a proximity based identification technique, and the second authentication technique comprises an image processing identification technique that identifies an object or person in an image.

3. A multi step authentication method in accordance with claim 1, wherein the method comprises an additional step of executing a third authentication phase, the third authentication phase comprises a third authentication technique, wherein the third authentication technique comprises a location identification technique, and; the first, second and third authentication phases are sequentially alterable.

4. A multi step authentication method in accordance with claim 1, wherein the first authentication phase comprises the additional steps of:
wirelessly interacting with at least one transceiver device via a user device associated with the person or vehicle,
receiving a verification signal from the at least one transceiver device at the user device, wherein the verification signal confirming the user device has successfully interacted with the at least one transceiver device,
calculating proximity of the user device to the at least one transceiver device at the user device,
determining the user device as successfully authenticated if the user device is within a predetermined proximity of the at least one transceiver device,
transmitting, to the authentication server, meta data related to the user if the user device is determined as authenticated.

5. A multi step authentication method in accordance with claim 4, wherein the first authentication phase comprises the additional steps of:
processing the received meta data corresponds to an authenticated user,
providing a confirmation signal confirming the person or vehicle associated is an authorized user device.

6. A multi step authentication method in accordance with claim 4 or 5, wherein the transceiver device comprises at least one of: a WiFi module, a Bluetooth transceiver or an NFC receiver, wherein the transceiver is positioned at a predetermined location.

7. A multi step authentication method in accordance with any one of claims 1 to 6, wherein the second authentication phase comprises the additional steps of:
issuing, a predetermined token, by an authentication party and may include information similar to the stored meta data or code, and
storing on the user device when the user device is set up for use,
wherein when the user is authenticated by the user device, the meta data or code corresponding to the captured image can be compared and checked for correspondence with the token on the user device before authentication is confirmed.

8. A multi step authentication method in accordance with any one of claims 3 to 7, wherein the third authentication phase comprises the additional steps of:
determining the location of the user device, wherein the user device is associated with the person or a vehicle, wherein the location of the user device is determined using a positioning system,
authenticating the person or vehicle as an authorized person or vehicle is at a predetermined location.

9. A multi step authentication method to authenticate a person, the multi step authentication method comprising the steps of:
determining, at a user device, a location of the user device associated with the person, wherein the location of the user device is determined at the user device using a positioning system;
transmitting, by the user device, the location of the user device to an authentication server;
processing, at the authentication server, the received location and determining if the user device is at a predetermined location or within vicinity of a predetermined location;
transmitting, by the authentication server, a verification signal to the user device confirming the user device is at a predetermined location or within vicinity of a predetermined location;
executing a first authentication process using a first authentication technique in response to receiving a verification signal, wherein the first authentication technique comprises a proximity based identification technique;
executing a second authentication process using a second authentication technique in response to receiving a verification signal, wherein the second authentication technique comprises a image processing based identification technique;
authenticating, at the user device, a person as an authorized person if the user device is identified at a predetermined location or in the vicinity of a predetermined location and the first authentication process determines a successful authentication and the second authentication process determines a successful authentication,
wherein the second authentication phase is performed by
transmitting, by the authentication server, an activation signal to the user device to activate the camera integral to the user device if the first authentication process results in a successful authentication of the person,
processing, at the user device, the captured image to generate meta data or a code associated with the captured image,
transmitting, by the user device, the meta data or transmitting a code associated with the meta data to the authentication server for comparing, the received meta data with stored meta data or comparing the received code with a stored code,
comparing, at the authentication server, the received meta data with stored meta data or comparing the received code with a stored code, wherein the stored meta data or stored code corresponds to an authorized person;
the person is deemed authenticated if the received meta data from the user device corresponds substantially to the stored meta data or if the received code substantially corresponds to the stored code..

10. A multi step authentication method to authenticate a person in accordance with claim 9, wherein the positioning system is a global positioning system (GPS), and the user device continually interacts with the global positioning system to determine a location of the user device.

11. A multi step authentication method to authenticate a person in accordance with claim 9 or 10, wherein the first authentication process comprises the steps of:
interrogating, by the user device, a transceiver device;
calculating, by the user device, a proximity of the transceiver device from the user device;
the user device is deemed authenticated if the user device is calculated to be within a predefined proximity to the transceiver device; wherein the transceiver device comprises at least one of: a WiFi module, a Bluetooth transceiver or an NFC receiver, wherein the transceiver is positioned at a predetermined location;
transmitting, by the user device, to the authentication server a code or an identity number, wherein the code or identity number is a unique code or unique identity number, and wherein the code or identity number corresponds to the person.

12. A multi step authentication method to authenticate a person in accordance with any one of claims 9 to 11, wherein the second authentication process comprises the steps of:
transmitting, by the authentication server, an activation signal to a camera integral to the user device to activate the camera if the first authentication process results in a successful authentication of the person;
capturing an image of the person by the camera;
receiving, at the authentication server, the captured image;
processing the captured image at the user device, wherein an object recognition technique is applied to the received captured image to identify the person;
processing, the captured image to generate meta data or a code associated with the captured image; and;
the person is deemed authenticated if received meta data from the user device corresponds substantially to the stored meta data or if the received code substantially corresponds to the stored code,
transmitting a confirmation of authentication to the user device from the server if the person is authenticated.

13. A multi step authentication method to authenticate a person in accordance with any one of claims 9 to 12, wherein the multi step authentication method comprises the additional steps of:
transmitting, by the authentication server, an activation signal to activate a fixed camera if the first authentication process is successful;
capturing, by the camera, an image of an object associated with the person,
transmitting, by the camera, the captured image to the authentication server,
processing, by the authentication server, the captured image by applying an object recognition technique to the captured image to identify one or more structural features or alphanumeric characters located within the captured image,
comparing the identified one or more structural features or alphanumeric characters with one or more approved structural features or approved alphanumeric characters,
the person is authenticated, by the authentication server, if the identified one or more structural features or alphanumeric characters correspond to the approved structural features or approved alphanumeric characters.

14. A multi step authentication method to authenticate a person in accordance with any one of claims 9 to 13, wherein the method comprises the step of executing an enrollment process, wherein the enrollment process comprises:
capturing an image of the person, identity of the user device and authorization information;
identifying image meta data related to the captured image of the person generating a code, at the authentication server, wherein the code is associated with the person and the image meta data.

## Patentansprüche

1. Verfahren zur Authentifizierung in mehreren Schritten zum Authentifizieren einer Person als autorisierte Person, wobei das Verfahren zur Authentifizierung in mehreren Schritten von einem System zur Authentifizierung in mehreren Schritten ausgeführt wird, das einen Authentifizierungsserver, eine Benutzervorrichtung beinhaltet, wobei das Verfahren die folgenden Schritte umfasst:
- Ausführen einer ersten Authentifizierungsphase, wobei die erste Authentifizierungsphase das Durchführen einer ersten Authentifizierungstechnik umfasst;
- Ausführen einer zweiten Authentifizierungsphase, wobei die zweite Authentifizierungsphase das Durchführen einer zweiten Authentifizierungstechnik umfasst, wobei die erste Authentifizierungstechnik und die zweite Authentifizierungstechnik unterschiedlich sind; wobei sowohl die erste als auch die zweite Authentifizierungstechnik kontaktlose Authentifizierungstechniken verwenden;
wobei die zweite Authentifizierungsphase durchgeführt wird durch das
Übertragen, durch den Authentifizierungsserver, eines Aktivierungssignals an die Benutzervorrichtung, um die Kamera, die in die Benutzervorrichtung integriert ist, zu aktivieren, wenn der erste Authentifizierungsprozess zu einer erfolgreichen Authentifizierung der Person führt,
Verarbeiten, an der Benutzervorrichtung, des aufgenommenen Bildes, um Metadaten oder einen Code zu generieren, der dem aufgenommenen Bild zugeordnet ist,
Übertragen, durch die Benutzervorrichtung, der Metadaten oder Übertragen eines den Metadaten zugeordneten Codes an den Authentifizierungsserver zum Vergleichen der empfangenen Metadaten mit gespeicherten Metadaten oder Vergleichen des empfangenen Codes mit einem gespeicherten Code.

2. Verfahren zur Authentifizierung in mehreren Schritten nach Anspruch 1, wobei die erste Authentifizierungstechnik eine auf Nähe basierende Identifizierungstechnik umfasst und die zweite Authentifizierungstechnik eine Bildverarbeitungsidentifizierungstechnik umfasst, die ein Objekt oder eine Person in einem Bild identifiziert.

3. Verfahren zur Authentifizierung in mehreren Schritten nach Anspruch 1, wobei das Verfahren einen zusätzlichen Schritt des Ausführens einer dritten Authentifizierungsphase umfasst, wobei die dritte Authentifizierungsphase eine dritte Authentifizierungstechnik umfasst, wobei die dritte Authentifizierungstechnik eine Standortidentifizierungstechnik umfasst, und; wobei die erste, zweite und dritte Authentifizierungsphase sequentiell veränderbar sind.

4. Verfahren zur Authentifizierung in mehreren Schritten nach Anspruch 1, wobei die erste Authentifizierungsphase die folgenden zusätzlichen Schritte umfasst:
drahtloses Interagieren mit mindestens einer Transceiver-Vorrichtung über eine Benutzervorrichtung, die der Person oder dem Fahrzeug zugeordnet ist,
Empfangen eines Verifizierungssignals von der mindestens einen Transceiver-Vorrichtung an der Benutzervorrichtung, wobei das Verifizierungssignal bestätigt, dass die Benutzervorrichtung erfolgreich mit der mindestens einen Transceiver-Vorrichtung interagiert hat,
Berechnen der Nähe der Benutzervorrichtung zu der mindestens einen Transceiver-Vorrichtung an der Benutzervorrichtung,
Bestimmen der Benutzervorrichtung als erfolgreich authentifiziert, wenn sich die Benutzervorrichtung in einer vorbestimmten Nähe der mindestens einen Transceiver-Vorrichtung befindet,
Übertragen, an den Authentifizierungsserver, von Metadaten, die sich auf den Benutzer beziehen, wenn die Benutzervorrichtung als authentifiziert bestimmt wird.

5. Verfahren zur Authentifizierung in mehreren Schritten nach Anspruch 4, wobei die erste Authentifizierungsphase die folgenden zusätzlichen Schritte umfasst:
das Verarbeiten der empfangenen Metadaten entspricht einem authentifizierten Benutzer,
Bereitstellen eines Bestätigungssignals, das bestätigt, dass die zugeordnete Person oder das zugeordnete Fahrzeug eine autorisierte Benutzervorrichtung ist.

6. Verfahren zur Authentifizierung in mehreren Schritten nach Anspruch 4 oder 5, wobei die Transceiver-Vorrichtung mindestens eines von Folgenden umfasst: einem WiFi-Modul, einem Bluetooth-Transceiver oder einem NFC-Empfänger, wobei der Transceiver an einem vorbestimmten Standort positioniert ist.

7. Verfahren zur Authentifizierung in mehreren Schritten nach einem der Ansprüche 1 bis 6, wobei die zweite Authentifizierungsphase die folgenden zusätzlichen Schritte umfasst:
Ausstellen eines vorbestimmten Tokens durch eine Authentifizierungspartei, und das Informationen beinhalten kann, die den gespeicherten Metadaten oder dem gespeicherten Code ähnlich sind, und
Speichern auf der Benutzervorrichtung, wenn die Benutzervorrichtung für die Verwendung eingerichtet ist,
wobei, wenn der Benutzer durch die Benutzervorrichtung authentifiziert ist, die Metadaten oder der Code, die dem aufgenommenen Bild entsprechen, verglichen und auf Übereinstimmung mit dem Token auf der Benutzervorrichtung überprüft werden können, bevor die Authentifizierung bestätigt wird.

8. Verfahren zur Authentifizierung in mehreren Schritten nach einem der Ansprüche 3 bis 7, wobei die dritte Authentifizierungsphase die folgenden zusätzlichen Schritte umfasst:
Bestimmen des Standorts der Benutzervorrichtung, wobei die Benutzervorrichtung der Person oder einem Fahrzeug zugeordnet ist, wobei der Standort der Benutzervorrichtung unter Verwendung eines Positionierungssystems bestimmt wird,
wobei das Authentifizieren der Person oder des Fahrzeugs als autorisierte Person oder autorisiertes Fahrzeug an einem vorbestimmten Standort erfolgt.

9. Verfahren zur Authentifizierung in mehreren Schritten zum Authentifizieren einer Person, wobei das Verfahren zur Authentifizierung in mehreren Schritten die folgenden Schritte umfasst:
Bestimmen, an einer Benutzervorrichtung, eines Standorts der Benutzervorrichtung, die der Person zugeordnet ist, wobei der Standort der Benutzervorrichtung an der Benutzervorrichtung unter Verwendung eines Positionierungssystems bestimmt wird;
Übertragen, durch die Benutzervorrichtung, des Standorts der Benutzervorrichtung an einen Authentifizierungsserver;
Verarbeiten, an dem Authentifizierungsserver, des empfangenen Standorts und Bestimmen, ob sich die Benutzervorrichtung an einem vorbestimmten Standort oder in der nahen Umgebung eines vorbestimmten Standorts befindet;
Übertragen, durch den Authentifizierungsserver, eines Verifizierungssignals an die Benutzervorrichtung, das bestätigt, dass sich die Benutzervorrichtung an einem vorbestimmten Standort oder in der nahen Umgebung eines vorbestimmten Standorts befindet;
Ausführen eines ersten Authentifizierungsprozesses unter Verwendung einer ersten Authentifizierungstechnik als Reaktion auf das Empfangen eines Verifizierungssignals, wobei die erste Authentifizierungstechnik eine auf Nähe basierende Identifizierungstechnik umfasst;
Ausführen eines zweiten Authentifizierungsprozesses unter Verwendung einer zweiten Authentifizierungstechnik als Reaktion auf das Empfangen eines Verifizierungssignals, wobei die zweite Authentifizierungstechnik eine auf Bildverarbeitung basierende Identifizierungstechnik umfasst;
Authentifizieren, an der Benutzervorrichtung, einer Person als autorisierte Person, wenn die Benutzervorrichtung an einem vorbestimmten Standort oder in der nahen Umgebung eines vorbestimmten Standortes identifiziert wird und der erste Authentifizierungsprozess eine erfolgreiche Authentifizierung bestimmt und der zweite Authentifizierungsprozess eine erfolgreiche Authentifizierung bestimmt,
wobei die zweite Authentifizierungsphase durchgeführt wird durch das
Übertragen, durch den Authentifizierungsserver, eines Aktivierungssignals an die Benutzervorrichtung, um die Kamera, die in die Benutzervorrichtung integriert ist, zu aktivieren, wenn der erste Authentifizierungsprozess zu einer erfolgreichen Authentifizierung der Person führt,
Verarbeiten, an der Benutzervorrichtung, des aufgenommenen Bildes, um Metadaten oder einen Code zu generieren, der dem aufgenommenen Bild zugeordnet ist,
Übertragen, durch die Benutzervorrichtung, der Metadaten oder Übertragen eines den Metadaten zugeordneten Codes an den Authentifizierungsserver zum Vergleichen der empfangenen Metadaten mit gespeicherten Metadaten oder Vergleichen des empfangenen Codes mit einem gespeicherten Code,
Vergleichen, an dem Authentifizierungsserver, der empfangenen Metadaten mit gespeicherten Metadaten oder Vergleichen des empfangenen Codes mit einem gespeicherten Code, wobei die gespeicherten Metadaten oder der gespeicherte Code einer autorisierten Person entsprechen;
wobei die Person als authentifiziert gilt, wenn die von der Benutzervorrichtung empfangenen Metadaten im Wesentlichen den gespeicherten Metadaten entsprechen oder wenn der empfangene Code im Wesentlichen dem gespeicherten Code entspricht.

10. Verfahren zur Authentifizierung in mehreren Schritten zum Authentifizieren einer Person nach Anspruch 9, wobei das Positionierungssystem ein globales Positionierungssystem (GPS) ist und die Benutzervorrichtung kontinuierlich mit dem globalen Positionierungssystem interagiert, um einen Standort der Benutzervorrichtung zu bestimmen.

11. Verfahren zur Authentifizierung in mehreren Schritten zum Authentifizieren einer Person nach Anspruch 9 oder 10, wobei der erste Authentifizierungsprozess die folgenden Schritte umfasst:
Abfragen, durch die Benutzervorrichtung, einer Transceiver-Vorrichtung;
Berechnen, durch die Benutzervorrichtung, einer Nähe der Transceiver-Vorrichtung von der Benutzervorrichtung;
wobei die Benutzervorrichtung als authentifiziert gilt, wenn die Benutzervorrichtung so berechnet ist, dass sie sich in einer vordefinierten Nähe zu der Transceiver-Vorrichtung befindet; wobei die Transceiver-Vorrichtung mindestens eines von Folgenden umfasst: einem WiFi-Modul, einem Bluetooth-Transceiver oder einem NFC-Empfänger, wobei der Transceiver an einem vorbestimmten Standort positioniert ist;
Übertragen, durch die Benutzervorrichtung, eines Codes oder einer Identitätsnummer an den Authentifizierungsserver, wobei der Code oder die Identitätsnummer ein eindeutiger Code oder eine eindeutige Identitätsnummer ist und wobei der Code oder die Identitätsnummer der Person entspricht.

12. Verfahren zur Authentifizierung in mehreren Schritten zum Authentifizieren einer Person nach einem der Ansprüche 9 bis 11, wobei der zweite Authentifizierungsprozess die folgenden Schritte umfasst:
Übertragen, durch den Authentifizierungsserver, eines Aktivierungssignals an eine Kamera, die in die Benutzervorrichtung integriert ist, um die Kamera zu aktivieren, wenn der erste Authentifizierungsprozess zu einer erfolgreichen Authentifizierung der Person führt;
Aufnehmen eines Bildes der Person durch die Kamera;
Empfangen, an dem Authentifizierungsserver, des aufgenommenen Bildes;
Verarbeiten des aufgenommenen Bildes an der Benutzervorrichtung, wobei eine Objekterkennungstechnik auf das empfangene aufgenommene Bild angewendet wird, um die Person zu identifizieren;
Verarbeiten des aufgenommenen Bildes, um Metadaten oder einen Code zu generieren, der dem aufgenommenen Bild zugeordnet ist; und;
wobei die Person als authentifiziert gilt, wenn von der Benutzervorrichtung empfangene Metadaten im Wesentlichen den gespeicherten Metadaten entsprechen oder wenn der empfangene Code im Wesentlichen dem gespeicherten Code entspricht,
Übertragen einer Bestätigung der Authentifizierung an die Benutzervorrichtung von dem Server, wenn die Person authentifiziert ist.

13. Verfahren zur Authentifizierung in mehreren Schritten zum Authentifizieren einer Person nach einem der Ansprüche 9 bis 12, wobei das Verfahren zur Authentifizierung in mehreren Schritten die folgenden zusätzlichen Schritte umfasst:
Übertragen, durch den Authentifizierungsserver, eines Aktivierungssignals, um eine feste Kamera zu aktivieren, wenn der erste Authentifizierungsprozess erfolgreich ist;
Aufnehmen, durch die Kamera, eines Bildes eines Objekts, das der Person zugeordnet ist, Übertragen, durch die Kamera, des aufgenommenen Bildes an den Authentifizierungsserver, Verarbeiten, durch den Authentifizierungsserver, des aufgenommenen Bildes durch Anwenden einer Objekterkennungstechnik auf das aufgenommene Bild, um ein oder mehrere Strukturmerkmale oder alphanumerische Zeichen zu identifizieren, die sich in dem aufgenommenen Bild befinden,
Vergleichen des identifizierten einen oder der identifizierten mehreren Strukturmerkmale oder alphanumerischen Zeichen mit einem oder mehreren genehmigten Strukturmerkmalen oder genehmigten alphanumerischen Zeichen,
wobei die Person durch den Authentifizierungsserver authentifiziert wird, wenn der identifizierte eine oder die identifizierten mehreren Strukturmerkmale oder alphanumerischen Zeichen den genehmigten Strukturmerkmalen oder genehmigten alphanumerischen Zeichen entsprechen.

14. Verfahren zur Authentifizierung in mehreren Schritten zum Authentifizieren einer Person nach einem der Ansprüche 9 bis 13, wobei das Verfahren den Schritt des Ausführens eines Registrierungsprozesses umfasst, wobei der Registrierungsprozess Folgendes umfasst:
Aufnehmen eines Bildes der Person, Erfassen der Identität der Benutzervorrichtung und der Autorisierungsinformationen; Identifizieren von Bildmetadaten, die sich auf das aufgenommene Bild der Person beziehen, die einen Code generieren, an dem Authentifizierungsserver, wobei der Code der Person und den Bildmetadaten zugeordnet ist.

## Revendications

1. Procédé d'authentification en plusieurs étapes permettant l'authentification d'une personne en tant que personne autorisée, le procédé d'authentification en plusieurs étapes étant exécuté par un système d'authentification en plusieurs étapes comprenant un serveur d'authentification, un dispositif utilisateur, le procédé comprenant les étapes de :
- exécution d'une première phase d'authentification, la première phase d'authentification comprend la réalisation d'une première technique d'authentification ;
- exécution d'une deuxième phase d'authentification, la deuxième phase d'authentification comprend la réalisation d'une deuxième technique d'authentification, ladite première technique d'authentification et ladite deuxième technique d'authentification étant disparates ; lesdites première et deuxième techniques d'authentification utilisant toutes deux des techniques d'authentification sans contact ;
ladite deuxième phase d'authentification étant réalisée par
la transmission, par le serveur d'authentification, d'un signal d'activation au dispositif utilisateur pour activer la caméra intégrée au dispositif utilisateur si le premier processus d'authentification aboutit à une authentification réussie de la personne,
le traitement, au niveau du dispositif utilisateur, de l'image capturée pour générer des métadonnées ou un code associé à l'image capturée,
la transmission, par le dispositif utilisateur, des métadonnées ou la transmission d'un code associé aux métadonnées au serveur d'authentification en vue de la comparaison des métadonnées reçues aux métadonnées stockées ou de la comparaison du code reçu à un code stocké.

2. Procédé d'authentification en plusieurs étapes selon la revendication 1, ladite première technique d'authentification comprenant une technique d'identification basée sur la proximité, et ladite deuxième technique d'authentification comprenant une technique d'identification de traitement d'image qui identifie un objet ou une personne dans une image.

3. Procédé d'authentification en plusieurs étapes selon la revendication 1, ledit procédé comprenant une étape supplémentaire d'exécution d'une troisième phase d'authentification, ladite troisième phase d'authentification comprenant une troisième technique d'authentification, ladite troisième technique d'authentification comprenant une technique d'identification d'emplacement, et ; lesdites première, deuxième et troisième phases d'authentification pouvant être modifiées séquentiellement.

4. Procédé d'authentification en plusieurs étapes selon la revendication 1, ladite première phase d'authentification comprenant les étapes supplémentaires de :
interaction sans fil avec au moins un dispositif émetteur-récepteur par l'intermédiaire d'un dispositif utilisateur associé à la personne ou au véhicule,
réception d'un signal de vérification en provenance de l'au moins un dispositif émetteur-récepteur au niveau du dispositif utilisateur, ledit signal de vérification confirmant que le dispositif utilisateur a interagi avec succès avec l'au moins un dispositif émetteur-récepteur,
calcul de la proximité du dispositif utilisateur par rapport à l'au moins un dispositif émetteur-récepteur au niveau du dispositif utilisateur,
détermination du dispositif utilisateur comme authentifié avec succès si le dispositif utilisateur se trouve dans les limites d'une proximité prédéfinie du au moins un dispositif émetteur-récepteur,
transmission, au serveur d'authentification, de métadonnées relatives à l'utilisateur si le dispositif utilisateur est déterminé comme étant authentifié.

5. Procédé d'authentification en plusieurs étapes selon la revendication 4, ladite première phase d'authentification comprenant les étapes supplémentaires de :
traitement des métadonnées reçues correspondant à un utilisateur authentifié,
fourniture d'un signal de confirmation confirmant que la personne ou le véhicule associé est un dispositif utilisateur autorisé.

6. Procédé d'authentification en plusieurs étapes selon la revendication 4 ou 5, ledit dispositif émetteur-récepteur comprenant au moins un parmi : un module WiFi, un émetteur-récepteur Bluetooth ou un récepteur CCP, ledit émetteur-récepteur étant positionné au niveau d'un emplacement prédéfini.

7. Procédé d'authentification en plusieurs étapes selon l'une quelconque des revendications 1 à 6, ladite deuxième phase d'authentification comprenant les étapes supplémentaires de :
émission, par une partie d'authentification, d'un jeton prédéfini et peut comprendre des informations similaires aux métadonnées ou au code stockés, et
stockage sur le dispositif utilisateur lorsque le dispositif utilisateur est configuré pour être utilisé,
lorsque l'utilisateur est authentifié par le dispositif utilisateur, lesdites métadonnées ou le code correspondant à l'image capturée peuvent être comparés et vérifiés en vue de la correspondance avec le jeton sur le dispositif utilisateur avant que l'authentification ne soit confirmée.

8. Procédé d'authentification en plusieurs étapes selon l'une quelconque des revendications 3 à 7, ladite troisième phase d'authentification comprenant les étapes supplémentaires de :
détermination de l'emplacement du dispositif utilisateur, ledit dispositif utilisateur étant associé à la personne ou à un véhicule, ledit emplacement du dispositif utilisateur étant déterminé à l'aide d'un système de positionnement, authentification de la personne ou du véhicule en tant que personne ou véhicule autorisé se trouvant au niveau d'un emplacement prédéfini.

9. Procédé d'authentification en plusieurs étapes pour authentifier une personne, le procédé d'authentification en plusieurs étapes comprenant les étapes de :
détermination, au niveau d'un dispositif utilisateur, d'un emplacement du dispositif utilisateur associé à la personne, ledit emplacement du dispositif utilisateur étant déterminé au niveau du dispositif utilisateur à l'aide d'un système de positionnement ;
transmission, par le dispositif utilisateur, de l'emplacement du dispositif utilisateur à un serveur d'authentification ;
traitement, au niveau du serveur d'authentification, de l'emplacement reçu et détermination si le dispositif utilisateur se trouve au niveau d'un emplacement prédéfini ou dans le voisinage d'un emplacement prédéfini ;
transmission, par le serveur d'authentification, d'un signal de vérification au dispositif utilisateur confirmant que le dispositif utilisateur se trouve au niveau d'un emplacement prédéfini ou dans le voisinage d'un emplacement prédéfini ;
exécution d'un premier processus d'authentification à l'aide d'une première technique d'authentification en réponse à la réception d'un signal de vérification, ladite première technique d'authentification comprenant une technique d'identification basée sur la proximité ;
exécution d'un second processus d'authentification à l'aide d'une deuxième technique d'authentification en réponse à la réception d'un signal de vérification, ladite deuxième technique d'authentification comprenant une technique d'identification basée sur le traitement d'image ;
authentification, au niveau du dispositif utilisateur, d'une personne en tant que personne autorisée si le dispositif utilisateur est identifié au niveau d'un emplacement prédéfini ou dans le voisinage d'un emplacement prédéfini et le premier processus d'authentification détermine une authentification réussie et le second processus d'authentification détermine une authentification réussie,
ladite deuxième phase d'authentification étant réalisée par
la transmission, par le serveur d'authentification, d'un signal d'activation au dispositif utilisateur pour activer la caméra intégrée au dispositif utilisateur si le premier processus d'authentification aboutit à une authentification réussie de la personne,
le traitement, au niveau du dispositif utilisateur, de l'image capturée pour générer des métadonnées ou un code associé à l'image capturée,
la transmission, par le dispositif utilisateur, des métadonnées ou la transmission d'un code associé aux métadonnées au serveur d'authentification en vue d'une comparaison des métadonnées reçues aux métadonnées stockées ou d'une comparaison du code reçu à un code stocké,
la comparaison, au niveau du serveur d'authentification, des métadonnées reçues aux métadonnées stockées ou la comparaison du code reçu à un code stocké, lesdites métadonnées stockées ou le code stocké correspondant à une personne autorisée ;
ladite personne étant considérée authentifiée si les métadonnées reçues du dispositif utilisateur correspondent sensiblement aux métadonnées stockées ou si le code reçu correspond sensiblement au code stocké.

10. Procédé d'authentification en plusieurs étapes pour authentifier une personne selon la revendication 9, ledit système de positionnement étant un système mondial de positionnement (GPS), et ledit dispositif utilisateur interagissant continuellement avec le système mondial de positionnement pour déterminer un emplacement du dispositif utilisateur.

11. Procédé d'authentification en plusieurs étapes pour authentifier une personne selon la revendication 9 ou 10, ledit premier processus d'authentification comprenant les étapes de :
interrogation, par le dispositif utilisateur, d'un dispositif émetteur-récepteur ;
calcul, par le dispositif utilisateur, d'une proximité du dispositif émetteur-récepteur par rapport au dispositif utilisateur ;
le dispositif utilisateur est considéré authentifié si le dispositif utilisateur est estimé se trouver dans les limites d'une proximité prédéfinie du dispositif émetteur-récepteur ; ledit dispositif émetteur-récepteur comprenant au moins un parmi : un module WiFi, un émetteur-récepteur Bluetooth ou un récepteur CCP, ledit émetteur-récepteur étant positionné au niveau d'un emplacement prédéfini ;
transmission, par le dispositif utilisateur, au serveur d'authentification d'un code ou d'un numéro d'identité, ledit code ou ledit numéro d'identité étant un code unique ou un numéro d'identité unique, et ledit code ou ledit numéro d'identité correspondant à la personne.

12. Procédé d'authentification en plusieurs étapes pour authentifier une personne selon l'une quelconque des revendications 9 à 11, ledit second processus d'authentification comprenant les étapes de :
transmission, par le serveur d'authentification, d'un signal d'activation à une caméra intégrée au dispositif utilisateur pour activer la caméra si le premier processus d'authentification aboutit à une authentification réussie de la personne ;
capture d'une image de la personne par la caméra ;
réception, au niveau du serveur d'authentification, de l'image capturée ;
traitement de l'image capturée au niveau du dispositif utilisateur, une technique de reconnaissance d'objet est appliquée à l'image capturée reçue pour identifier la personne ;
traitement de l'image capturée pour générer des métadonnées ou un code associé à l'image capturée ; et ;
ladite personne étant considérée authentifiée si les métadonnées reçues en provenance du dispositif utilisateur correspondent sensiblement aux métadonnées stockées ou si le code reçu correspond sensiblement au code stocké,
transmission d'une confirmation d'authentification au dispositif utilisateur à partir du serveur si la personne est authentifiée.

13. Procédé d'authentification en plusieurs étapes pour authentifier une personne selon l'une quelconque des revendications 9 à 12, ledit procédé d'authentification en plusieurs étapes comprenant les étapes supplémentaires de :
transmission, par le serveur d'authentification, d'un signal d'activation pour activer une caméra fixe si le premier processus d'authentification est réussi ;
capture, par la caméra, d'une image d'un objet associé à la personne,
transmission, par la caméra, de l'image capturée au serveur d'authentification,
traitement, par le serveur d'authentification, de l'image capturée en appliquant une technique de reconnaissance d'objet à l'image capturée pour identifier un ou plusieurs traits structuraux ou caractères alphanumériques situés dans l'image capturée,
comparaison de la ou des traits structuraux ou caractères alphanumériques identifiés avec un ou plusieurs traits structuraux ou caractères alphanumériques approuvés,
la personne est authentifiée, par le serveur d'authentification, si le ou les traits structuraux ou caractères alphanumériques identifiés correspondent aux traits structuraux approuvés ou aux caractères alphanumériques approuvés.

14. Procédé d'authentification en plusieurs étapes pour authentifier une personne selon l'une quelconque des revendications 9 à 13, ledit procédé comprenant l'étape d'exécution d'un processus d'inscription, ledit processus d'inscription comprenant :
la capture d'une image de la personne, de l'identité du dispositif utilisateur et des informations d'autorisation ; l'identification de métadonnées d'image relatives à l'image capturée de la personne générant un code, au niveau du serveur d'authentification, ledit code étant associé à la personne et aux métadonnées d'image.
